# EUROPEAN PATENT SPECIFICATION

(11) **EP 3 158 280 B1**
(45) Date of publication and mention of the grant of the patent: **01.08.2018**
(21) Application number: 15728105.6
(22) Date of filing: 04.06.2015
(51) Int. Cl.: G01B 3/04

(54) **DEVICES FOR HOLDING A TAPE MEASURE**
VORRICHTUNGEN ZUM AUFNEHMEN EINES MASSBANDS
DISPOSITIFS POUR TENIR UN MÈTRE RUBAN

(30) Priority: 19.06.2014 GB 201410972; 06.03.2015 GB 201503840
(43) Date of publication of application: 26.04.2017
(73) Proprietor: Redall Ltd, Wrightington, Wigan, Lancashire WN6 9RH (GB)
(72) Inventor: REDDINGTON, David, Wigan, Lancashire WN6 9RH (GB)
(74) Representative: D Young & Co LLP
(86) International application number: PCT/GB2015/051626
(87) International publication number: WO 2015/193639

(56) References cited:
- CN-A- 102 729 701
- CN-U- 201 646 147
- DE-A1- 19 738 073
- DE-A1- 19 749 026
- GB-A- 1 244 752
- US-A1- 2010 000 102
- US-B1- 6 223 443

## Description

### BACKGROUND

### Field of the Disclosure

The present invention relates to a device, peg, system and tape measure.

### Description of the Related Art

The "background" description provided herein is for the purpose of generally presenting the context of the disclosure. Work of the presently named inventors, to the extent it is described in the background section, as well as aspects of the description which may not otherwise qualify as prior art at the time of filing, are neither expressly or impliedly admitted as prior art against the present invention.

When undertaking building, maintenance or improvement work, it is often necessary drill a plurality of holes in surfaces (such as walls) which are a set distance apart and which are level with each other. For example, when putting up a curtain rail, which will usually be attached to a wall using a screw at each end of the curtain rail, it is necessary for holes drilled in the wall which are to receive the screw at each end of the curtain rail to be an appropriate distance apart, depending on the length of the curtain rail, and to be level.

Currently, in order to drill, for example, two holes in a surface which are a set distance apart and which are level, the position of the first hole must first be marked. A measuring level (such as a spirit level) must then be used to mark a level line from the position of the first hole. Once the level line has been marked, a ruler (for example, a straight edge ruler or a tape measure) is then used to measure out the desired distance of the second hole from the first hole along the level line. Once the desired distance has been measured out, the position of the second hole on the surface can then be marked.

Today's measuring levels are often integrated with a ruler so as to form a combined unit which allows the user to determine the level line and hole separation distance simultaneously. However, in order for the level line and hole separation distance to be determined simultaneously for holes which are to be separated by relatively large distances (for example, the hole separation distance required for a curtain rail may be 2 or 3 metres), extra long versions of these combined units must be used. Due to their size, these units are expensive and cumbersome to carry around. They are also easily damaged, due to the combination of their large size (which means that they are more likely knock into other objections as they are carried around) and the fact that the measuring levels they comprise are quite delicate. An alternative is to use a shorter combined unit which is not sufficiently long to mark the position of the second hole at the desired hole separation distance but which can be used a plurality of times to mark increasing, intermediate distances from the position of the first hole until the desired hole separation distance is reached. This circumvents the problems associated with the longer combined units. However, the need to repetitively use the shorter combined units risks introducing error into the level line (since small errors which may be present each time the shorter combined unit is used will be aggregated). It is also a cumbersome and inconvenient method for the user. DE 197 49 026 A1 discloses a device for holding a ruler, comprising a peg insertable into a hole on a surface, a main body fixedly connected to the peg and a holding element adapted to hold a portion of the ruler, such that said rule extends in a direction perpendicular to a radial line centered at the hole. The present invention therefore aims to alleviate the above-mentioned problems.

### SUMMARY

A first aspect of the present invention, which is defined in the independent claim 1, provides a device for holding a tape measure, comprising: a peg which is insertable into a hole on a surface; a main body configured to rotate about the centre of the hole on the surface when the peg is inserted into the hole; and a holding element configured to hold a portion of the tape measure such that, in use, the tape measure extends in a direction substantially perpendicular to a radial line of a circle centred at the centre of the hole on the surface. The holding element is configured to hold the portion of the tape measure by frictionally engaging the portion of the tape measure between a surface of the main body and a surface of the holding element. One of the surface of the main body and the surface of the holding element comprises a resilient member configured to exert a force on the portion of the tape measure so as to frictionally engage the portion of the tape measure between the surface of the main body and the surface of the holding element.

In an embodiment, one of the surface of the main body and the surface of the holding element comprises a magnet. The main body comprises a guiding edge configured to guide the tape measure in the direction substantially perpendicular to the radial line of the circle centred the centre of the hole on the surface.

In an embodiment, the guiding edge is a lip engaging edge substantially aligned with the radial line of the circle centred at the centre of the hole on the surface and configured to engage a lip fixed at the end of the tape measure. The guiding edge is a longitudinal guiding edge configured to engage a longitudinal edge of the tape measure.

A second aspect of the present invention ,which is defined in the independent claim 4, provides a device for marking a point on a surface at a position indicated by a tape measure, comprising: a main body; an attachment element configured to attach the device to the tape measure; a position indicator configured to, in use, indicate the position of the device along the tape measure; and a marking element aligned with the position indicator and configured to allow the surface to be marked. The attachment element is configured to attach the device to the tape measure by engaging the tape measure between a surface of the main body and a surface of the attachment element. One of the surface of the main body and the surface of the attachment element comprises a resilient member configured to exert a force on the tape measure so as to frictionally engage the tape measure between the surface of the main body and the surface of the attachment element. The surface of the main body comprises a guiding edge configured to guide the tape measure in a direction determined by the guiding edge.

In an embodiment, the marking element comprises a marker pod configured to mark the surface when it is pressed by a user. A third aspect of the present invention, which is defined in the independent claim 7, provides a device for holding a tape measure, comprising: an aperture configured to receive a peg protruding from a hole on a surface; a main body configured to rotate about the centre of the hole on the surface when the aperture has received the peg; and a holding element configured to hold a portion of the tape measure such that, in use, when the aperture has received the peg, the tape measure extends in a direction substantially perpendicular to a radial line of a circle centred at the centre of the hole on the surface. The aperture is configured such that, when the aperture has received the peg, the centre of the aperture is substantially aligned with the centre of the hole on the surface and an inner edge of the aperture frictionally engages the peg.

In an embodiment, the size of the aperture is adjustable.

In an embodiment, the inner edge of the aperture is defined by a plurality of blades which are configured to move in a direction so as to protrude from the main body in order to reduce the size of the aperture and to retract into the main body in order to increase the size of the aperture.

In an embodiment, each of the plurality of blades is configured to be biased to move in the direction so as to protrude from the main body.

In an embodiment, the main body comprises a harder material and a softer material, and a portion of the main body which, in use, contacts the surface comprising the hole comprises the softer material. The holding element is configured to hold the portion of the tape measure by frictionally engaging the portion of the tape measure between a surface of the main body and a surface of the holding element. One of the surface of the main body and the surface of the holding element comprises a resilient member configured to exert a force on the portion of the tape measure so as to frictionally engage the portion of the tape measure between the surface of the main body and the surface of the holding element.

In an embodiment, one of the surface of the main body and the surface of the holding element comprises a magnet. The main body comprises a guiding edge configured to guide the tape measure in the direction substantially perpendicular to the radial line of the circle centred at the centre of the hole on the surface.

In an embodiment, the guiding edge is a lip engaging edge substantially aligned with the radial line of the circle centred at the centre of the hole on the surface and configured to engage a lip fixed at the end of the tape measure. The guiding edge is a longitudinal guiding edge configured to engage a longitudinal edge of the tape measure.

In an embodiment, the device comprises a measuring level positioned so as to perform level measuring with respect to one of a direction substantially parallel with the direction determined by the guiding edge and a direction substantially perpendicular to the direction determined by the guiding edge. A fourth aspect of the present invention provides a tape measure comprising the device according to any preceding aspect of the present invention.

The foregoing paragraphs have been provided by way of general introduction, and are not intended to limit the scope of the following claims. The described embodiments, together with further advantages, will be best understood by reference to the following detailed description taken in conjunction with the accompanying drawings.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
Figure 1 describes a system according to an embodiment of the present invention;
Figures 2A-B describe a holding device and marking device according to embodiments of the present invention;
Figures 3A-E describes various ways in which the holding device, marking device and a tape measure can be used to mark a surface;
Figures 4A-B illustrate a peg of the holding device in plan view;
Figure 5 describes the holding device with a first alternative peg;
Figures 6A-B illustrate the first alternative peg in plan view;
Figure 7 describes the holding device with a second alternative peg;
Figures 8A-B illustrate the second alternative peg in plan view;
Figure 9 describes the holding device with a third alternative peg;
Figures 10A-B illustrate the third alternative peg in plan view;
Figure 11 describes the holding device with a fourth alternative peg;
Figures 12A-B illustrate a cross section of the marking device;
Figures 13A-D show arrangements of a marker pod of the marking device;
Figures 14A-B show further possible features of the holding device and/or marking device;
Figures 15A-D show a holding device mount for use with the holding device according to an embodiment of the present invention;
Figures 16A-C show a holding device according to an alternative embodiment;
Figures 17A-17B show an iris arrangement comprised by the alternative embodiment;
Figure 18 shows the mechanical engagement of iris blades of the alternative embodiment with a peg;
Figures 19A-B show the holding device mount of Figures 15A-D which additionally comprises a groove for engagement of the iris blades of the alternative embodiment;
Figures 20A-B show a rotating peg assembly for use with the alternative embodiment; and
Figures 21A-B show a further variation related to the alternative embodiment.

### DESCRIPTION OF THE EMBODIMENTS

Referring now to the drawings, wherein like reference numerals designate identical or corresponding parts throughout the several views.

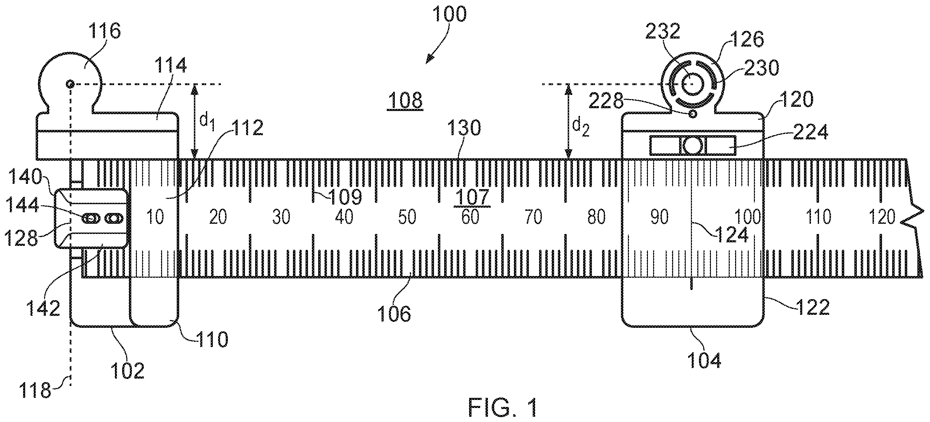

Figure 1 shows a system 100 according to an embodiment of the present invention when in use. The system 100 comprises a holding device 102 for holding a tape measure 106 and a marking device 104 for marking a point on a surface 108 at a position indicated by the tape measure 106. In Figure 1, the surface 108 is considered to parallel with the plane of the page.

The holding device 102 comprises a peg 116 which is insertable into a hole (not shown in Figure 1) on the surface 108, a main body 114 configured to rotate about the centre of the hole on the surface 108 when the peg 116 is inserted into the hole and a holding element 110 configured to hold a portion 112 of the tape measure such that the tape measure extends in a direction substantially perpendicular to a radial line 118 of a circle centred at the centre of the hole on the surface 108. More specifically, the holding element 110 is configured such that the tape measure 106 extends in a direction such that a measurement surface 107 of the tape measure 106 comprising measurement markings 109 is substantially parallel with the surface 108.

The marking device 104 comprises a main body 120, an attachment element 122 configured to attach the marking device 104 to the tape measure 106, a position indicator 124 configured to indicate the position of the marking device 104 along the tape measure 106 and a marking element 126 aligned with the position indicator 124 and configured to allow the surface 108 to be marked.

During use of the system 100, a first hole is drilled in the surface 108. The tape measure 106 is then held by the holding element 110 of the holding device 102 and the peg 116 of the holding device 102 is inserted into the first hole. At the same time, the marking device 104 is attached to the tape measure 106 such that the position indicator 124 indicates a position along the tape measure 106 indicative of the desired hole separation distance. For example, if the zero-end 128 of the tape measure 106 is aligned with the radial line 118 at the holding device 102, and the desired hole separation distance is X cm, then the marking device 104 will be attached to the tape measure 106 such that the position indicator 124 indicates a position of X cm along the tape measure 106.

When the marking device 104 has been attached to the tape measure 106 at an appropriate position, the tape measure 106 is rotated about the axis of rotation of the main body 114 of the holding device 102 until the tape measure 106 is level. The tape measure 106 may be determined as level using a measuring level which is aligned with a longitudinal edge 130 of the tape measure 106. In embodiments, an integrated measuring level 224 (such as a spirit level, electronic level, laser level, audible level or the like) may be integrated with at least one of the holding device 102 and marking device 104. This is discussed in more detail later on.

Once the tape measure 106 has been made level, the positions of the peg 116 of the holding device 102 and the marking element 126 of the marking device 104 will be level. The position of the second hole is then marked on the surface 108 using the marking element 126. The marking element 126 comprises at least one of a marker pod 232, an arced implement slot 230 and a implement hole 228. Each of these possibilities is discussed in detail later on.

The holding device 102 and marking device 104 are small and lightweight and are attachable to most conventional tape measures. When attached to the tape measure 106, the holding device 102 and marking device 104 allow first and second level holes to be drilled in the surface 108 with a maximum hole separation distance limited only by the maximum measurable distance of the tape measure 106. Furthermore, this is achieved in a manner which is easy and convenient for the user.

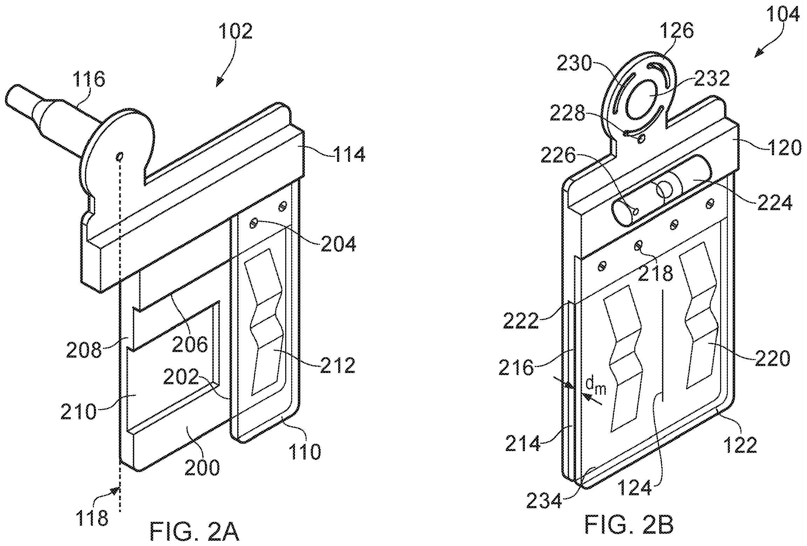

Figures 2A and 2B show, respectively, the holding device 102 and marking device 104 in more detail, according to embodiments of the present invention.

Figure 2A shows the holding device 102 according to an embodiment.

As already mentioned with respect to Figure 1, the holding device 102 comprises a main body 114, a peg 116 and a holding element 110.

The peg 116 is rotatably insertable into the first hole in the surface 108. In this embodiment, the peg 116 is tapered so as to aid insertion of the peg 116 into the first hole.

The holding element 110 is configured to hold the portion 112 of the tape measure 106 such that the tape measure 106 extends in a direction substantially perpendicular to a radial line 118 of a circle centred at the centre of rotation of the hole on the surface 108.

The holding element 110 is configured to hold the portion 112 of the tape measure 106 by frictionally engaging the portion 112 between a surface 200 of the main body 114 and a surface 202 of the holding element 110. The holding element 110 is fixed to the main body 114 at one end using screws 204. Alternatively, the holding element 110 may be fixed to the main body 114 at one end using a bonding agent such as a suitable glue or adhesive. The holding element 110 may therefore resiliently flex about this fixed end, thus acting as a clip. This allows different tape measures 106 of varying thickness to be frictionally engaged between the surface 200 of the main body and the surface 202 of the holding element 110.

The main body 114 is rotatable about the centre of the hole on the surface 108 by being rotatably connected to the peg 116. Alternatively, the main body 114 may be fixed to the peg 116 such that the main body 114 and peg 116 do not rotate with respect to each other. In this case, the peg 116 itself is rotatable when it is inserted in the hole on the surface 108 so as to allow the main body to be rotatable about the centre of the hole.

The main body 114 comprises a guiding edge configured to guide the tape measure 106 in the direction substantially perpendicular to the radial line 118. For example, the tape measure 106 is guided by a longitudinal guiding edge 206 when the tape measure 106 is held by the holding element 110 and a longitudinal edge 130 of the tape measure 106 engages the guiding edge 206. Together with the holding element 110, the longitudinal guiding edge 206 helps to ensure that the tape measure 106 is held such that it extends in the direction substantially perpendicular to the radial line 118.

Alternatively, the guiding edge may be a lip engaging edge 208 substantially aligned with the radial line 118 and configured to engage a lip 140 fixed at the end of the tape measure 106 (see Figure 1). Commercially available tape measures 106 often include a lip 140 which defines the end of the tape measure 106 and which is configured to engage with the edges of objects (such as the edges of door frames, furniture or the like) so as to allow the tape measure to be extended. The lip 140 is usually formed as part of a clasp 142 attached to an end portion of the tape measure 106 by way of rivets 144.

When the lip 140 of the tape measure 106 is engaged with the lip engaging edge 208, the end of the tape measure is substantially aligned with the radial line 118. Together with the holding element 110 and (if present) longitudinal guiding edge 206, this helps to reduce the movement of the tape measure 106 relative to the holding device 104, thus helping to ensure that the tape measure 106 is held such that it extends in the direction substantially perpendicular to the radial line 118. It also helps to ensure that the end of the tape measure 106 is substantially aligned with the first hole, thus making it easier to measure a hole separation distance from the first hole.

In order to accommodate the rivets 144, the surface 200 of the main body 114 of the holding device 102 comprises a recess 210. This helps to ensure that the tape measure 106 is able to sit flush against the surface 200 when it is held by the holding element 110, thus allowing the tape measure to be held more securely.

The surface 200 of the main body 114 of the holding device 102 comprises a resilient member 212 (such as a compression spring) configured to exert a force on the portion 112 of the tape measure 106 so as to frictionally engage the portion 112 between the surface 200 of the main body 114 and the surface 202 of the holding element 110. Alternatively, or in addition, the surface 202 of the holding element 110 may comprise such a resilient member 212. This allows the amount of friction by which the tape measure 106 is held between the holding element 110 and the main body 114 to be tailored, depending on the strength of the resilient member. Thus, for example, a stronger resilient member (which requires greater compression in order to deform) can be chosen so as to increase the amount of friction, resulting in the tape measure 106 being held more securely. The presence of the resilient member 212 also helps to ensure that different tape measures 106 of varying thickness can be satisfactorily frictionally engaged between the holding element 110 and main body 114, since the resilient member 212 will become more or less compressed depending on the thickness of the tape measure 106 used so as to ensure that contact between the tape measure 106 and surfaces 200, 202 is maintained.

Alternatively, or in addition, the surface 200 of the main body 114 and/or the surface 202 of the holding element 110 may comprise a magnet (not shown) so as to help secure tape measures 106 comprising magnetically responsive materials (such as iron or steel).

Figure 2B shows the marking device 104 according to an embodiment.

As already mentioned, the marking device 104 comprises a main body 120, an attachment element 122, a position indicator 124 and a marking element 126.

The attachment element 122 is configured to attach the marking device 104 to the tape measure 106. More specifically, the attachment element 122 is configured to attach the marking device 104 to the tape measure 106 by engaging the tape measure 106 between a surface 214 of the main body 120 and a surface 216 of the attachment element 122. The attachment element 122 is fixed to the main body 120 at one end using screws 218. Alternatively, the attachment element 122 may be fixed to the main body 120 at one end using a bonding agent such as a suitable glue or adhesive. The attachment element 110 may therefore resiliently flex about this fixed end, thus acting as a clip. This allows different tape measures 106 of varying thickness to be engaged between the surface 200 of the main body and the surface 202 of the holding element 110.

It is noted that the attachment element 122 of the marking device 104 is similar to the holding element 110 of the holding device 102. However, in order to make it easier to move the marking device 104 to the desired position along the tape measure 106, the attachment element 122 may not frictionally engage the tape measure 106 between the surfaces 214, 216. Rather, the attachment element 122 may be configured such that there is negligible friction between the surfaces 214, 216 and the tape measure 106 so that the marking device 104 is slidable along the tape measure 106. Alternatively (as in this embodiment), the attachment element 122 may frictionally engage the tape measure 106 between the surfaces 214, 216, but with a reduced level of friction compared to that present for frictionally engaging the tape measure 106 between the surfaces 200, 202 of the holding device so that the marking device 104 is slidable along the tape measure 106.

In order to frictionally engage the tape measure 106 between the attachment element 122 and main body 120, the surface 214 of the main body 120 of the marking device 104 may comprise a resilient member 220 (such as a compression spring) configured to exert a force on the tape measure 106 so as to frictionally engage the tape measure 106 between the surface 214 of the main body 120 and the surface 216 of the attachment element 122. Alternatively, or in addition, the surface 216 of the attachment element 122 may comprise such a resilient member 220. This allows the amount of friction by which the tape measure 106 is held between the attachment element 110 and the main body 120 to be tailored, depending on the strength of the resilient member. Thus, for example, a resilient member 220 may be chosen with a strength which results in a level of friction that allows the marking device 104 to easily slide along the tape measure 106 when it is moved by a user, but not under the influence of gravity (meaning that the marking device 104 does not accidently slide away from a specific position on the tape measure 106 determined by the user). The presence of the resilient member 220 also helps to ensure that different tape measures 106 of varying thickness can be satisfactorily frictionally engaged between the attachment element 122 and main body 120, since the resilient member 212 will become more or less compressed depending on the thickness of the tape measure 106 used so as to ensure that contact between the tape measure 106 and surfaces 200, 202 is maintained.

Alternatively, or in addition, the surface 214 of the main body 120 and/or the surface 216 of the attachment element 122 may comprise a magnet (not shown) so as to help engage tape measures 106 comprising magnetically responsive materials (such as iron or steel) between the surfaces 214, 216.

The attachment element 122 is substantially transparent (that is, sufficiently transparent for markings on the tape measure 106 to be visible through the attachment element) and the position indicator 124 comprises a visible mark on the attachment element 122. This allows the marking device 104 to be easily positioned at the desired position along the tape measure 106.

There may, in fact, be two visible marks on the attachment element 122 so as to form the position indicator 124, one mark on the surface 216 which frictionally engages with the tape measure 106 and one mark on an outer surface 234 of the attachment element 122 which is directly viewable by the user. The two marks are aligned with each other and are spatially separated by a distance equal to the depth dₘ of the attachment element 122. The user is able to view both marks due to the substantial transparency of the attachment element 122. This arrangement allows the user to adjust their viewpoint with respect to the marking device 104 until it appears to the user that the two marks have converged. The user may then use the apparent converged marks as the position indicator when positioning the marking device 104 along the tape measure 106. This reduces error in the marking device positioning caused by a parallax effect of only having a single mark as the position indicator 124 which is spatially separated from the measurement markings on the tape measure 106.

The main body 120 comprises a guiding edge 222 configured to guide the tape measure 106 in a direction determined by the guiding edge 222. The tape measure 106 is guided by the guiding edge 222 when it is held by the attachment element 122 and the longitudinal edge 130 of the tape measure 106 engages the guiding edge 222. When a first portion of the tape measure 106 is held by the holding device 102 and a second portion of the tape measure 106 is attached to the marking device 104, the tape measure 106 will become level when the guiding edge 222 becomes level. It is noted that, in order to ensure that the peg 116 of the holding device 102 and the marking element 126 of the marking device 104 are level when the tape measure 106 is level, the distance d₁ from the guiding edge 206 to the centre of the peg 116 of the holding device 102 is equal to the distance d₂ from the guiding edge 222 to the centre of the marking element 126 of the marking device 104.

In order to help the user ensure that the tape measure 106 is level when using the holding device 102 and marking device 104, at least one of the holding device 102 and marking device 104 may comprise a measuring level. Any suitable measuring level, for example, a spirit level, electronic level, laser level or audible level, can be used as measuring level. Advantageously, this means that the user does not have to user a separate measuring level with the hold device 102 and marking device 104, thus increasing the convenience for the user.

In Figures 2A-B, it is the marking device 104 of Figure 2B which comprises the measuring level 224. The measuring level 224 is positioned so as to perform level measuring with respect to a direction substantially parallel with the direction determined by the guiding edge 222. This allows the user to easily identify when the tape measure 106 is level when the tape measure 106 is guided by the guiding edge 222.

Alternatively, the measuring level 224 may be positioned so as to perform level measuring with respect to a direction substantially perpendicular to the direction determined by the guiding edge 222. This allows the user to use the holding device 102 and marking device 104 to mark a plurality of holes in the surface 108 which are vertically plumb with each other by allowing the user to easily identify when the tape measure 106 is vertically plumb when the tape measure 106 is guided by the guiding edge 222.

The position of the measuring level 224 may be changeable between a first position for performing level measuring with respect to the direction substantially parallel with the direction determined by the guiding edge 222 and a second position for performing level measuring with respect to the direction substantially perpendicular to the direction determined by the guiding edge 222. This allows the user to easily switch between using the holding device 102 and marking device 104 for marking a plurality of holes which are horizontally level with each other and for marking a plurality of holes which are vertically plumb with each other. The measuring level 224 may be rotatable about a pivot 226 in order to change between the first and second position.

Furthermore, the position of the measuring level 224 may be changeable on a graduated basis from the first position to the second position so that the measuring level 224 may be positioned at these graduations. The graduations may be at key angles between the first position and second position which are most likely to be used by the user. For example, if the first position is considered to be at 0 degrees and the second position is considered to be at 90 degrees, then the key angle graduations may be at 30, 45 and 60 degrees. This means that, in addition to being able to mark a plurality of holes which are horizontally level or vertically plumb, holes may be marked such that a line between the holes is at a predetermined angle with the horizontal or vertical. For example, if the measuring level 224 is positioned at the 45 degree key angle mentioned above, then plurality of holes may be marked such that a line between the holes is at 45 degrees with the horizontal or vertical.

When the holding device 102 comprises a measuring level (not shown) instead of or in addition to the marking device 104 comprising the measuring level 224, the measuring level is positioned so as to perform level measuring with respect to one of a direction substantially parallel with the direction determined by one of the guiding edges 206, 208, thus allowing the user to easily identify when the tape measure 106 is horizontally level (for the longitudinal guiding edge 206) or vertically plumb (for the lip engaging edge 208), and a direction substantially perpendicular to the direction determined by one of the guiding edges 206, 208, thus allowing the user to easily identify when the tape measure 106 is vertically plumb (for the longitudinal guiding edge 206) or horizontally level (for the lip engaging edge 208). Again, the position of the measuring level may be changeable between a first position for performing level measuring with respect to a direction substantially parallel with the direction determined by one of the guiding edges 206, 208 and a second position for performing level measuring with respect to a direction substantially perpendicular to the direction determined by one of the guiding edges 206, 208. This allows the user to easily switch between using the holding device 102 and marking device 104 for marking a plurality of holes which are horizontally level with each other and for marking a plurality of holes which are vertically plumb with each other. Again, the measuring level may be rotatable about a pivot (now shown) in order to change between the first and second position.

The marking element 126 comprises a implement hole 228 bored through the main body 120, one or more implement slots 230 bored through the main body 120 and shaped so as to define an arc of a circle centred at the centre of the marking element 126, and a marker pod 232 configured to mark the surface 108 when it is pressed by the user. The marking element 126 may comprise only a portion of these features (for example, only the marker pod 232 or only the marker pod 232 and implement slots 230). Each of these features allows the surface 108 to be marked once the marking device 104 has been attached at the desired position on the tape measure 106 and/or the tape measure 106 has been made horizontally level or vertically plumb. The user marks the surface 108 using one of the implement slots 230 or the implement hole 228 by inserting the tip of a writing implement (such as a pencil) into the implement slot 230 or implement hole and marking the surface 108 with the writing implement. By using the implement slots 230, arcs of a circle, the centre of which indicates the position of the second hole, are marked on the surface 108. By using the implement slot 228, an arc of a circle centred at the position of the first hole may be drawn (see below). The user marks the surface 108 using the marker pod 232 by pushing the marker pod towards the surface 108 so that a marker (not shown in Figure 2A) on the marker pod makes contact with the surface 108. The marker is any implement suitable for leaving a visible mark on the surface 108. For example, the marker may mark the surface using ink or graphite (like a pencil) or may be a pin which leaves a small hole in the surface.

The holding device 102 and marking device 104 may each comprise a coupling mechanism (not shown) so that the holding device 102 and marking device 104 can be coupled together during storage. This ensures that the holding device 102 and marking device 104 can be stored together and that one of the devices cannot become lost without the other one. This improves the convenience for the user in storing and transporting the devices.

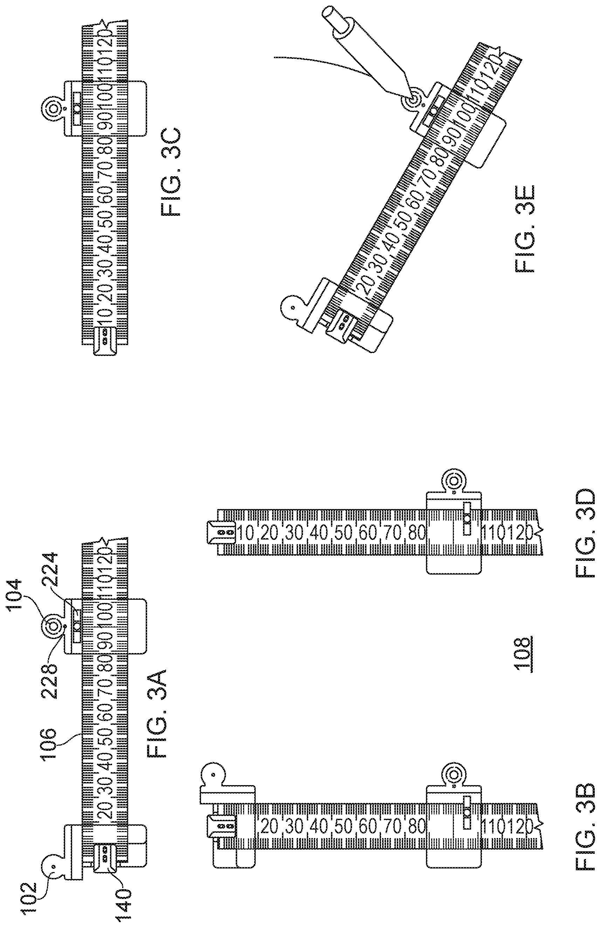

Figures 3A-E show various ways in which the holding device 102, marking device 104 and tape measure 106 can be used to mark the surface 108. Again, for Figures 3A-E, the surface 108 is parallel is considered to be parallel with the plane of the page.

In Figure 3A, both the holding device 102 and marking device 104 are used to determine the position of a second hole which is horizontally level with the first hole to be marked. Here, the measuring level 224 is positioned so as to perform level measuring with respect to a direction substantially parallel with the direction determined by the guiding edge 222.

In Figure 3B, both the holding device 102 and marking device 104 are used to determine the position of a second hole which is vertically plumb with the first hole to be marked. Here, the measuring level 224 is positioned so as to perform level measuring with respect to a direction substantially perpendicular to the direction determined by the guiding edge 222.

In Figure 3C, only the marking device 104 is attached to the tape measure 106, the tape measure 106 extending in a substantially horizontal direction. In this case, the end of the tape measure 106 is secured via the lip 140 engaging with the edge of an object (such as a door frame, furniture, or the like) rather than via the use of the holding device 102. This allows the user to mark a position on the surface 108 at a desired horizontal distance from the object edge. Here, the measuring level 224 is positioned so as to perform level measuring with respect to a direction substantially parallel with the direction determined by the guiding edge 222.

In Figure 3D, only the marking device 104 is attached to the tape measure 106, the tape measure 106 extending in a substantially vertical direction. Again, the end of the tape measure 106 is secured via the lip 140 engaging with the edge of an object (such as a door frame, furniture, or the like) rather than via the use of the holding device 102. This allows the user to mark a position on the surface 108 at a desired vertical distance from the object edge. Here, the measuring level 224 is positioned so as to perform level measuring with respect to a direction substantially perpendicular the direction determined by the guiding edge 222.

Figure 3E shows how the holding device 102 and marking device 104 can be used so as to allow the tape measure 106 to be rotated about the axis of rotation of the peg 116 of the holding device 102 and to allow an arc centred at the first hole to be drawn. The arc is drawn by placing the tip of a writing implement through the implement hole 228 as the tape measure 106 is rotated.

It is also envisaged that the holding device 102 could be used on its own (that is, without the marking device 104) so as to simply hold the tape measure 106 once a hole in the surface 108 has been drilled. This would suit users who, for example, prefer to roughly mark a measured distance from the first hole without the aid of the marking device 104.

Thus, it can be seen that the holding device 102 and marking device 104 each have their own distinct advantages and can be used together or separately.

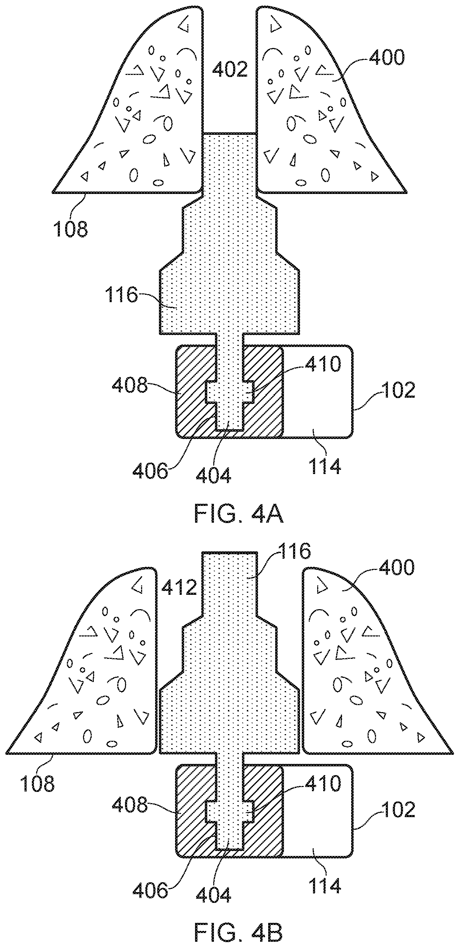

Figures 4A-B further illustrate the peg 116 of the holding device 102 shown in Figure 2A in plan view. The peg 116 is rotatably secured to the main body 114 by way of a protrusion 404 which rotatably sits inside a recess 406 of a connection housing 408 of the holding device 102. The protrusion is held within the recess 406 by circular flange 410. The peg 116 is tapered so as to allow it to be securely held by holes 402, 412 of different sizes in the surface 108 of a material 400, as illustrated in Figures 4A-B.

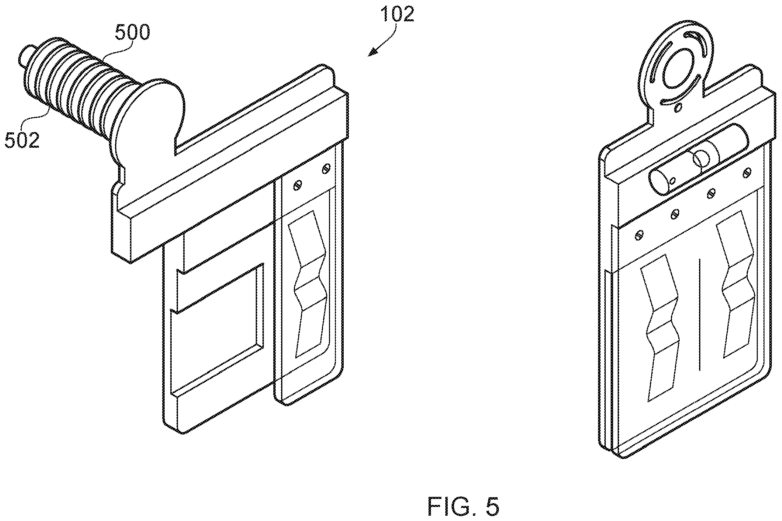

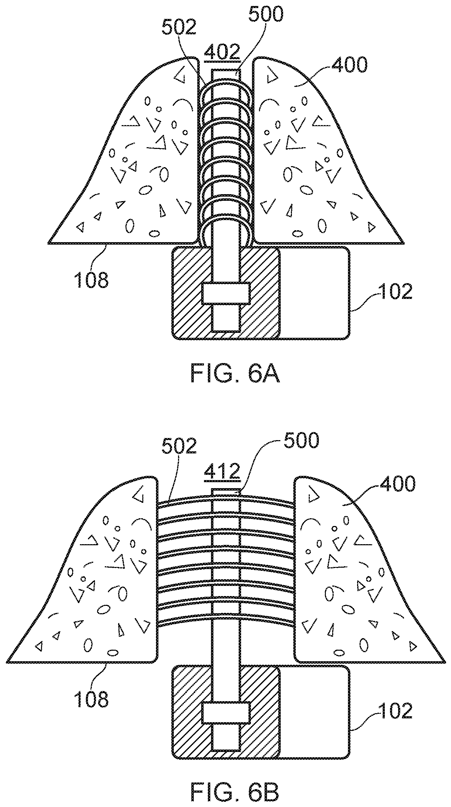

Figures 5 and 6A-B illustrate the holding device 102 with a peg 500 with an alternative outer surface arrangement according to an embodiment. All other features of the holding device 102 and marking device 104 remain the same and their references numerals have therefore been omitted for the sake of brevity. The outer surface of peg 500 comprises one or more resiliently flexible ribs 502. The ribs 502 may be manufactured, for example, from rubber, silicone or the like. The ribs 502 are configured to frictionally engage with the sides of the holes 402, 412 of different sizes in the surface 108 of the material 400.

Figures 6A-B further illustrate the peg 500 in plan view. Figure 6A illustrates the peg 500 after it has been inserted into a first hole 402. The ribs 502 have been compressed due to the user pushing the peg 500 into the hole 402 and have frictionally engaged with the sides of the hole 402, thus securing the peg 500 within the hole 402. Figure 6B illustrates the peg 500 after it has been inserted into a second, larger hole 412. It can be seen that, relative to the use of the peg 500 with the first, smaller hole 402, the ribs 502 have expanded to the width of the second hole 412 and have frictionally engaged with the sides of the second hole 412. This arrangement allows the peg 500 to be securely held within the holes 402, 412 of different sizes.

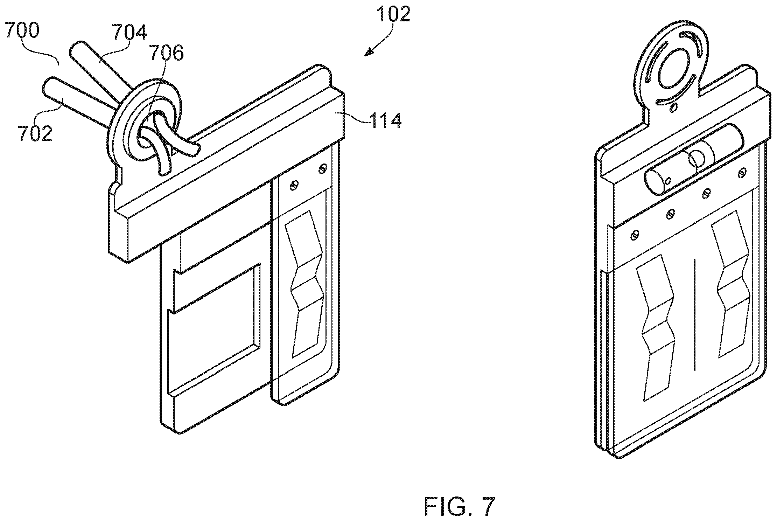

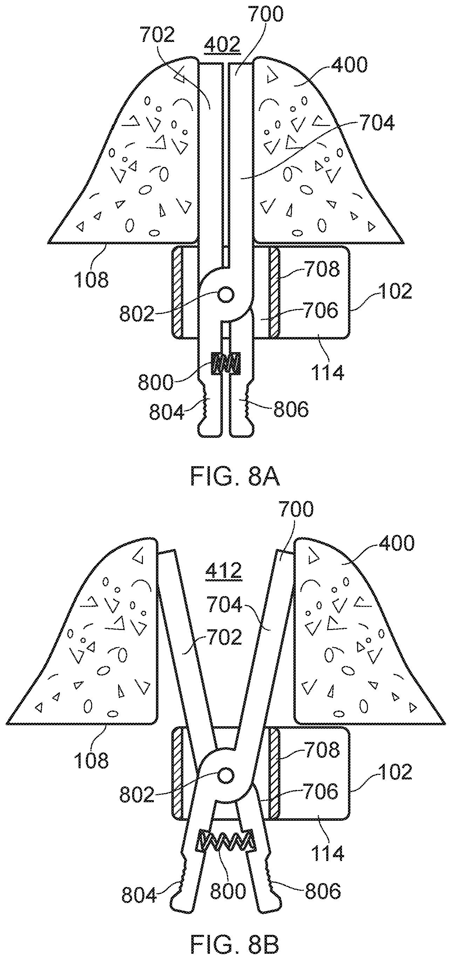

Figures 7 and 8A-B illustrate the holding device 102 with an alternative peg 700 according to an embodiment. The peg 700 is rotatably secured to the main body 114 by protruding through a bore 706 of the main body 114. The peg 700 comprises two branches 702, 704 configured to protrude into the holes 402, 412 of different sizes in the surface 108 of the material 400. The branches 702, 704 pivot with respect to each other and are connected via a resilient member 800 which urges one branch to pivot away from the other. All other features of the holding device 102 and marking device 104 remain the same and their references numerals have therefore been omitted for the sake of brevity.

Figures 8A-8B further illustrate the peg 700 in plan view. It can be seen that the branches 702, 704 of the peg 700 are connected via pivot 802 and that resilient member 800 is configured to urge one branch away from the other. Figure 8A illustrates the peg 700 shortly after it has been inserted into the first hole 402. The branches 702, 704 have been pushed together due to the user pushing grip portions 804, 806 of each of the branches 702, 704 together and pushing the peg 700 into the hole 402. The user has then let go of the grip portions 804, 806 so as to allow the resilient member 800 to urge the branches 702, 704 away from each other and to frictionally engage with the sides of the hole 402. Figure 8B illustrates the peg 700 after it has been inserted into the second, larger hole. It can be seen that, relative to the first, smaller hole 402, the branches 702, 704 have expanded to the width of the second hole 412 and have frictionally engaged with the sides of the second hole 412. This arrangement allows the peg 700 to be securely held within the holes 402, 412 of different sizes.

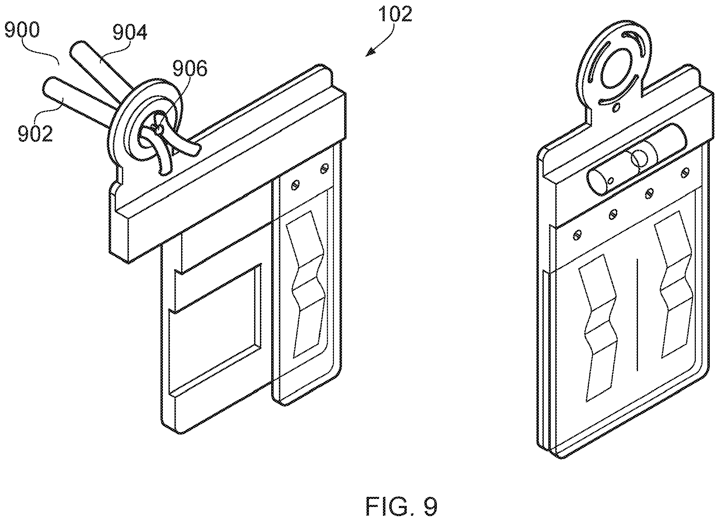

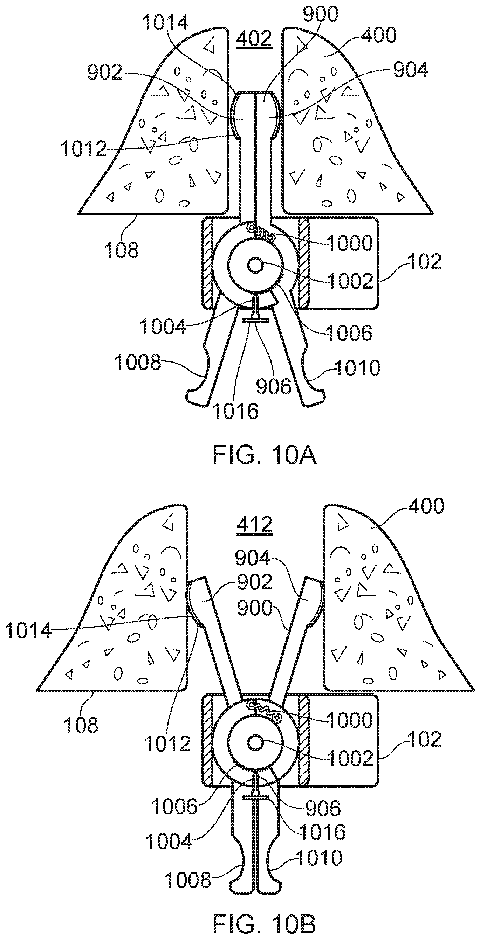

Figures 9 and 10A-B illustrate the holding device 102 with an alternative peg 900 according to an embodiment. Like the peg 700, the peg 900 again comprises two branches 902, 904 configured to protrude into the holes 402, 412 of different sizes in the surface 108 of the material 400. Again, the branches 902, 904 pivot with respect to each other. This time, however, the branches 902, 904 and are connected via a resilient member which urges one branch to pivot towards the other. The angular distance between the branches 902, 904 is fixable on a graduated basis by way of a ratchet arrangement 906. All other features of the holding device 102 and marking device 104 remain the same as that described with respect to Figures 7 and 8A-B and their references numerals have therefore been omitted for the sake of brevity.

Figures 10A-10B further illustrate the peg 900 in plan view. It can be seen that the branches 902, 904 of the peg 900 are connected via pivot 1002 and that resilient member 1000 is configured to urge one branch towards the other. One branch is prevented from pivoting towards the other under the influence of the resilient member 1000 by the ratchet arrangement 906, which comprises a rack 1006 and pawl 1004 to engage the teeth of the rack 1006. The ratchet arrangement 906 is configured so as to allow one branch to pivot away from the other with a graduated motion as the user pushes grip portions 1008, 1010 of the branches 902, 904. When the user wishes to allow the branches 902, 904 to pivot back together, the user pulls the pawl 1004 using gripper 1016 so that the pawl disengages with the teeth of the rack 1006. The branches 902, 904 and then urged together by the resilient member 1000.

Figure 10A illustrates the peg 900 shortly after it has been inserted into the first hole 402. The branches 902, 904 have been allowed to come together by the user pulling the pawl 1004 using gripper 1016. The user has then pushed the peg 900 into the hole 402 and the branches 902, 904 have frictionally engaged with the sides of the hole 402. Figure 10B illustrates the peg 900 after it has been inserted into the second, larger hole 412. Here, the user has caused one of the branches to pivot away from the other to a desired graduation by pushing grip portions 1008, 1010. The desired graduation is a graduation at which the branches 902, 904 expand to the width of the second hole 412 so as to frictionally engage with the sides of the second hole 412. This arrangement allows the peg 900 to be securely held within the holes 402, 412 of different sizes. Furthermore, because of the ratchet arrangement 906, the user has greater control over the amount of force exerted on the inner surface of the holes 402, 412. This is advantageous, for example, when using the holding device 102 with a hole in a brittle material (such as aging masonry) which may break or crumble if too much force is exerted on the inner surface of the hole.

The end of each of the branches 902, 904 may comprise a convex portion 1012 configured to engage with a side of a hole 402, 412 as the user pivots one branch away from the other. This allows the peg 900 to be held within the hole 402, 412 more securely. The convex portion 1012 may also comprise a coating 1014 configured to frictionally engage with the side of the hole, further securing the peg 900 within the hole 402. The coating 1014 may be comprised of, for example, rubber or silicone. It is noted that the end of branches 702, 704 may also comprise such a convex portion (not shown).

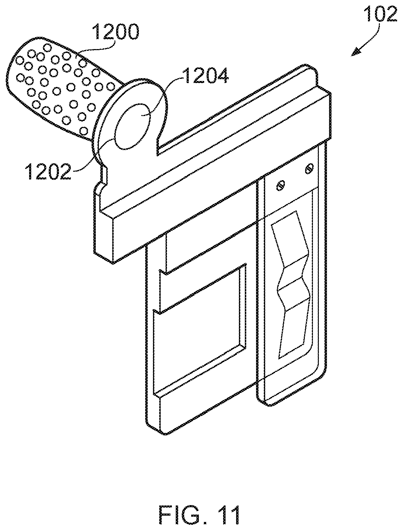

Figure 11 illustrates the holding device 102 with an alternative peg 1200 according to an embodiment. The peg 1200 is rotatably secured to the main body 114 by protruding through a bore 1202 of the main body 114. The peg 1200 is pneumatically inflatable so that as a gas (such as air) is pumped into it, the peg 1200 increases in size. In particular, the cross-sectional diameter of the peg 1200 increases as air is pumped into it, thus causing the peg 1200 to engage with the sides of a hole 402, 412. Once sufficiently inflated, this allows the peg to be held securely within the hole 402, 412. The peg 1200 is inflatable by the user repetitively compressing and decompressing a pump portion 1204, the pump portion 1204 comprising a suitable air inlet/outlet and valve arrangement (not shown) so as to allow the peg 1200 to be gradually inflated to the required size under the compression and decompression action by the user. It is noted that the peg 1200 could be hydraulically inflatable rather than pneumatically inflatable. All other features of the holding device 102 remain the same as previously described, and hence their references numerals have therefore been omitted for the sake of brevity.

It is noted that although the pegs 116, 500, 700, 900, 1200 in the embodiments described with respect to Figures 4 to 10 are rotatably secured to the main body 114 of the holding device 102, it may be suitable for the pegs to be non-rotatably fixed to the main body 114 at least some of the embodiments. For example, for the tapered peg 116 embodiment shown in Figures 4A-B, the peg 116 may be non-rotatably fixed to the main body 114. In this case, the main body 114 is rotatable about the centre of the hole 402 by way of the peg 116 itself rotating when it is inserted into the hole 402. Advantageously, such an arrangement means that the peg 116 and main body 114 of the holding device 102 can be formed as a single unit (using an injection molding process, for example), thus making manufacture of the holding device 102 easier. The holding device 102 may also function more reliably due to a reduced number of moving parts.

It is further envisaged that the pegs 116, 500, 700, 900, 1200 in the embodiments described with respect to Figures 4 to 10 may be interchangeable with each other. That is, each of the above-described pegs may be releasably connectable to the main body 114 of the holding device 102 so that the user can choose a particular peg according to their personal preference, thus improving the flexibility for the user. In this case, the main body 114 will comprise a universal connecting portion (not shown) so as to allow any one of the above-described pegs to be connected to it.

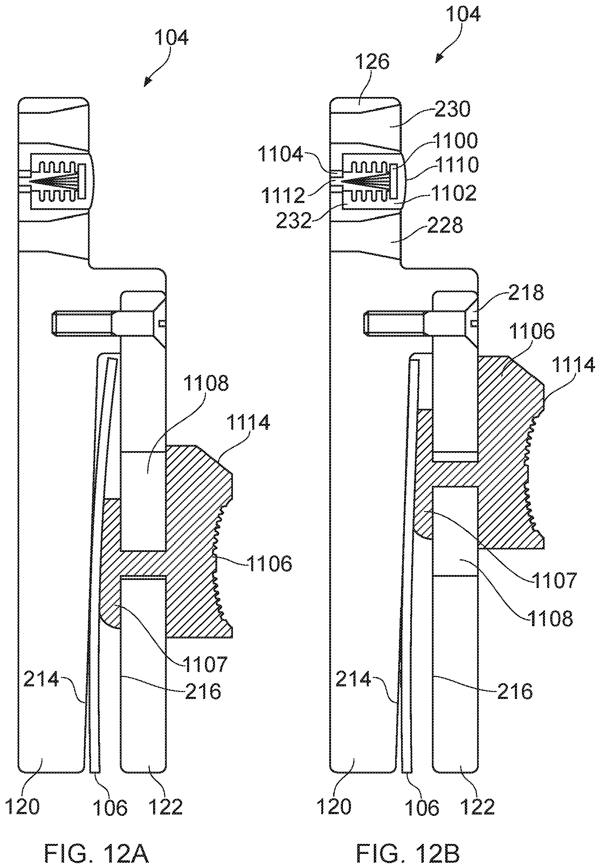

Figures 12A-B show a cross section of the marking device 104 so as to illustrate the marking element 126 in more detail (note that, for the sake of brevity, not all reference numerals have been repeated for both Figures 12A and 11B). In particular, Figures 12A-B show implement slot 230, implement hole 228 and marker pod 232. In this embodiment, the marker pod 323 comprises a pin 1100 fixed within a flexible pin mount 1102. When the user presses the surface 1110 of the flexible pin mount 1102, the flexible pin mount 1102 deforms and the tip of the pin 1100 is guided by pin guide 1104 and forced to protrude through bore 1112, thus making a small hole in the surface 108. The pin 1100 is comprised from a material sufficiently hard so as to allow the pin 1100 to make the small hole in the surface 108 under the force exerted by the user on the flexible pin mount surface 1110 without breaking or deforming. A suitable material could be steel, brass or tungsten carbide, for example. The flexible pin mount 1102 comprises a resilient material (such as rubber or silicone, for example) which reforms to its original shape and causes the pin 1100 to return to its original, non-protruded position when the user stops pressing on the surface 1110 of the flexible pin mount 1102.

The marking device 104 may also comprise a slide lock 1114, as illustrated in Figures 12A-B. The slide lock 1114 comprises a slider 1106 which is slidably secured to a slot 1108 bored through the holding element 122. The slider 1106 is connected to a tape measure contact portion 1107 configured to contact the tape measure 106 when the tape measure 106 is engaged between the surface 214 of the main body 120 and surface 216 of the holding element 122. The slider 1106 is slidable between two positions. In a first position, as illustrated in Figure 12A, the contact portion 1107 frictionally engages the tape measure 106 with a negligible or low amount of friction so as to allow the user to easily change position of the marking device 104 along the tape measure 106. On the other hand, in a second position as illustrated in Fig. 12B, the contact portion 1107 frictionally engages the tape measure 106 with a higher amount of friction so as to prevent the position of the marking device 104 along the tape measure 106 from changing easily. Thus, when the user has moved the marking device 104 to a desired position along the tape measure 106, the user may slide the slider 1106 to the second position so as to prevent the marking device 104 from moving away from the desired position easily.

In this case, the contact portion 1107 is wedge shaped and narrows in the direction in which the slider 1106 is slidable from the first position to the second position. Furthermore, the main body 120 is tapered such that the gap between the surface 214 of the main body 120 and the surface 116 of the attachment element 122 narrows in the direction in which the slider 1106 is slidable from the first position to the second position. This arrangement allows the tape measure 106 to be frictionally engaged between the surface 114 of the main body 120 and the surface 116 of the holding element 122 with a higher amount of friction in the second position. This works particularly well with standard commercia lly available construction tape measures which usually have a concave cross-section (this allows the tape measure to extend in an unsupported manner up to a certain distance), since, as illustrated in Figures 12A-B, the concave shape of the tape measure profile causes the contact portion 1107 and tape measure 106 to exert a greater force on each other and to thus frictionally engage with a higher amount of friction when the slider 1106 is in the second position.

It is noted that instead of or in addition to the marking device 104 comprising the slide lock 1114, the holding device 102 may comprise a slide lock (not shown). In this case, a slider is slidably secured to a slot bored through the holding element 110 of the holding device 102 and a tape measure contact portion is connected to the slider and is configured to contact the tape measure. The slider is slidable between a first position, in which the contact portion frictionally engages the tape measure with a first friction amount, and a second position, in which the contact portion frictionally engages the tape measure with a second friction amount, the second friction amount being greater than the first friction amount. Furthermore, the main body 114 of the holding device 102 is tapered such that a gap between the surface 200 of the main body 114 and the surface 202 of the holding element 110 narrows in the direction in which the slider is slidable from the first position to the second position. Such an arrangement allows the tape measure 106 to be held more securely by the holding device 102 when the slide lock is in the second position.

As well as the slide lock, it is envisaged that other locking mechanisms could be implemented with the holding device 102 and/or marking device 104 so as to enable the holding/marking device to be secured to the tape measure with different levels of frictional engagement. For example, a horizontal slide lock (not shown), which locks and unlocks using a substantially horizontal slider, or a rotating lock (not shown) which locks and unlocks using a rotating portion, could be used.

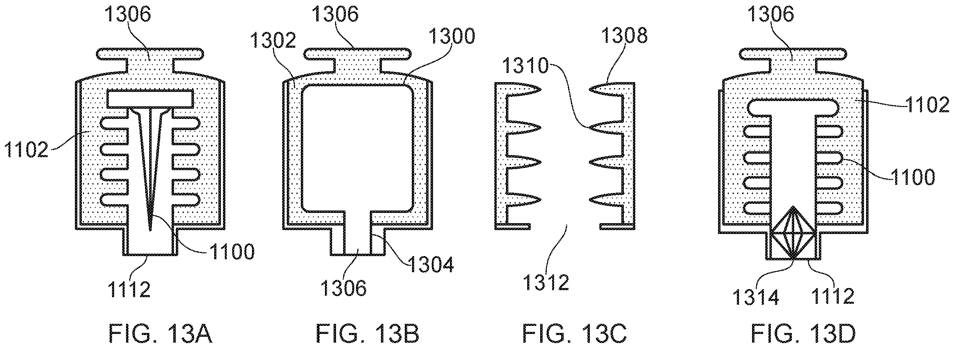

Figures 13A-D show alternative arrangements of the marker pod 232 according to embodiments.

Figure 13A shows the marker pod comprising a pin 1100 fixed within a flexible pin mount 1102, as previously described. In addition, in this embodiment, the marker pod comprises a pressing portion 1306 which is configured to be pressed by the user so as to deform the flexible pin mount 1102 and force the pin 1100 to protrude through the bore 1112.

Figure 13B shows an ink marker pod comprising an ink reservoir 1300 held within a flexible ink reservoir mount 1302. Similarly to the marker pod of Figure 13A, the flexible ink reservoir mount 1302 comprises a pressing portion 1306. The ink reservoir 1300 comprises a wick 1304 which protrudes out of the ink reservoir and which wicks ink from inside the ink reservoir to outside the ink reservoir. When the user presses the pressing portion 1306, the flexible ink reservoir mount 1302 deforms and causes an end of the wick 1304 which is outside the ink reservoir 1300 to protrude through a bore 1306 of the flexible ink reservoir mount 1302. This allows the surface 108 to be marked with ink. Advantageously, the use of ink rather than the pin 1100 (for example) means that structural damage to the surface 108 (due to the making of a small hole in the surface) is avoided. The flexible ink reservoir mount 1302 comprises a resilient material (such as rubber or silicone, for example) which reforms to its original shape and causes the end of the wick 1304 to return to its original, non-protruded position when the user stops pressing on the surface pressing portion 1306 of the flexible ink reservoir mount 1302.Figure 13C shows a flexible holder 1308. The flexible holder 1308 is configured to hold a writing implement (not shown) such as a pen or pencil so that the writing implement is able to mark the surface 108. The flexible holder 1308 is comprised of a resilient material (such as rubber or silicone, for example) and comprises flanges 1310 which are configured to frictionally engage the outer surface of the writing implement. The writing implement is thus securely held between the flanges 1310. The user is thus able to secure a writing implement within the flexible holder 1308 and position the marking device 104 without having to hold the writing implement, thus increasing the convenience for the user. Then, when the marking device 104 has been appropriately position, the user may push the writing implement such that it protrudes through bore 1312, thus marking the surface 108.

Figure 13D is a variation of the embodiment shown in Figure 13A. Specifically, in Figure 13D, the end of the pin 1100 comprises a hard point 1314 which protrudes through the bore 1112 when the flexible pin mount 1102 is deformed by the user. The hard point 1314 comprises a material which allows the pin 1100 to be used to mark harder materials such as glass or tile. For example, the hard point 1314 may comprise diamond or tungsten.

The different types of marker pod 232 may be interchangeable with each other. That is, each marker pod 232 may be releasably connectable to the main body 120 of the marking device 104 so that the user can choose a particular marker pod 232 according to their personal preference, thus improving the flexibility for the user. In this case, the main body 120 will comprise a universal connecting portion (not shown) so as to allow any one of the different marker pods 232 to be connected to it.

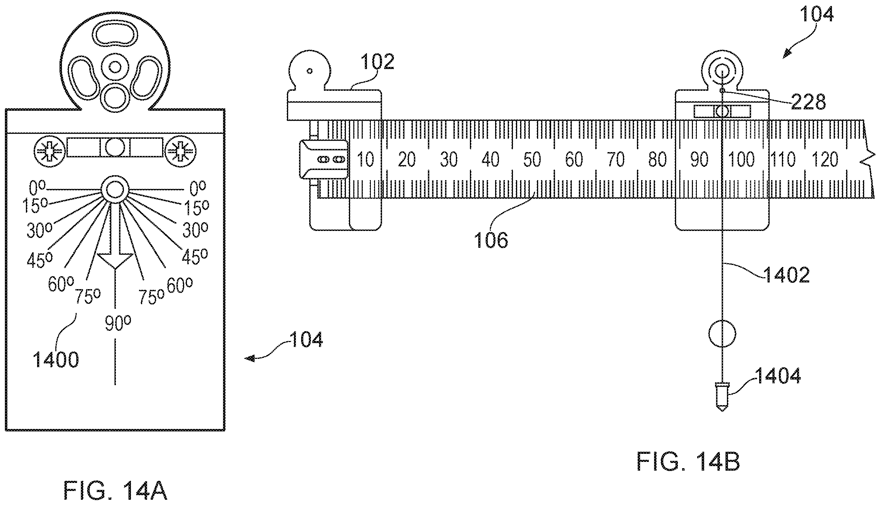

Figures 14A-B show further possible features of the holding device 102 and/or marking device 104.

As shown in Figure 14A, the marking device 104 may comprise an inclinometer 1400 which shows an angle of inclination of the marking device 104. This allows the user to use the holding device 102 and marking device 104 to mark two holes on a surface 108 wherein a straight line defined between the two holes is at a predetermined angle with the vertical or horizontal. In the example given in Figure 14A, this predetermined angle is defined with respect to the vertical (so that if the two holes are horizontally level, then the inclinometer reads 90 degrees, and if the two holes are vertically plumb, the inclinometer reads 0 degrees). However, it may be the case that the predetermined angle is determined with respect to the horizontal instead (so that if the two holes are horizontally level, then the inclinometer reads 0 degrees, and if the two holes are vertically plumb, the inclinometer reads 90 degrees). This arrangement improves the utility of the marking device 104, since it means that the marking device 104 can be used with the holding device 102 for ensuring that a straight line defined between two holes in a surface is at a predetermined angle with the vertical or horizontal. This is in addition to the previously described embodiments in which the holding device 102 and marking device 104 ensure that two holes in a surface are horizontally level or vertically plumb.

As shown in Figure 14B, a plumb bob 1404 may also be attached to the marking device 104 using a piece of string, wire or the like so as to form a plumb line. The string or wire may be looped and secured around the pressing portion 1306 when the marking device 104 comprises a marker pod 232 with the pressing portion 1306 (see the marker pods in Figures 13A, 13B and 13D, for example). Alternatively, the string or wire may be looped and secured around a writing implement held by the marking device 104 (for example, a writing implement held by the mark pod 232 shown in Figure 13C). Alternatively, the string or wire may be threaded through the implement hole 228 and tied to the marking device 104. By using the holding device 102, marking device 104 and plumb line with the tape measure 106, the user may identify a point on a surface which is a predetermined horizontal distance from the hole to which the holding device 102 is secured but which is not, in itself, horizontally level with this hole. This improves the utility of the holding device 102 and marking device 104 in determining the position of a point on a surface with respect to a hole which has been drilled in the surface. For example, if a hole has been drilled in a wall, the use of the plumb line may allow the position of an electrical socket, pipe inlet/outlet, etc. to be determined with respect to the drilled hole.

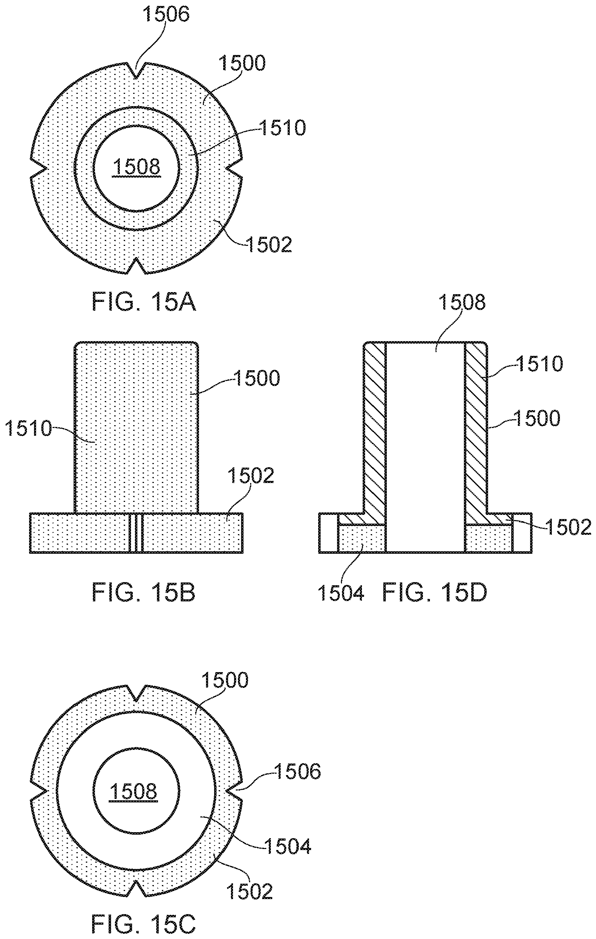

Although, in the above-described embodiments, the hole on the surface 108 with which the holding device 102 has been used has been a hole bored into the surface 108, the hole on the surface 108 may also be a hole in a holding device mount which is attached to the surface 108. An example of a holding device mount 1500 is shown in Figures 15A-D. Figures 15A-C show, respectively, a plan, elevation and base view of the holding device mount 1500. Figure 15D shows a cross-section of the holding device mount 1500.

The holding device mount 1500 comprises a base 1502 which is attachable to the surface 108 and a support portion 1510 which extends from the base 1502. A hole 1508 is bored through the support portion and may extend into the base 1502. The base 1502 comprises an attaching portion 1504 for attaching the base 1502 to the surface 108. The attaching portion 1504 is, in this case, a magnet, thus allowing the holding device mount 1500 to be attached to surfaces comprising magnetic materials such as iron or nickel. However, the attaching portion 1504 may, instead, comprise a suction pod, adhesive or any other suitable means for attaching the holding device mount 1500 to the surface 108. The base 1502 of the holding device mount 1500 is circular and comprises four notches around its circumference, each notch being separated by an angular distance of 90 degrees.

The holding device mount 1500 may thus be placed at an appropriate position on the surface 108 so as to form a hole 1508 on the surface 108 at that appropriate position. The appropriate position may be determined by the user by lining up the notches 1506 with centre lines which have been marked out on the surface 108. In use, the peg of the holding device 102 may then be inserted into the hole 1508. Thus, advantageously, the use of the holding device mount 1500 allows the holding device 102 to be used without a hole being bored directly into the surface 108. This improves the flexibility in the ways in which the holding device 102 may be used.

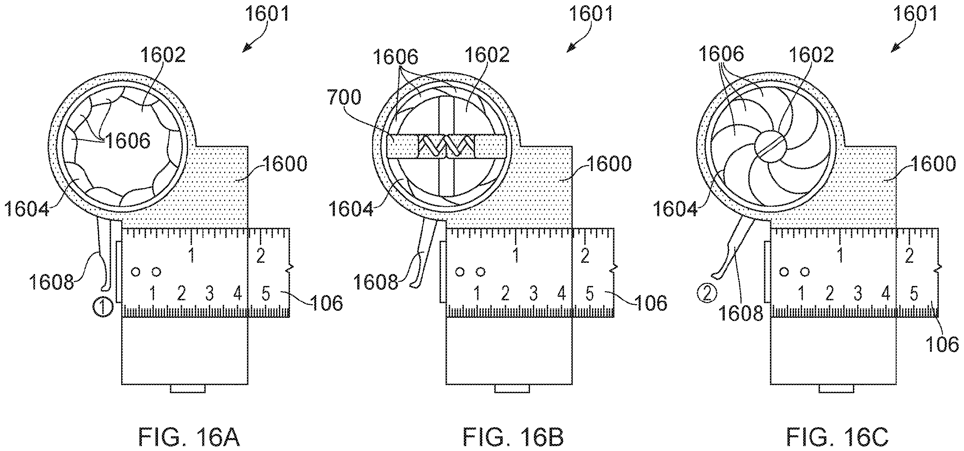

Figs. 16A-C show a holding device 1601 according to an alternative embodiment. The holding device 1601 is a separate entity to the pegs 116, 500, 700, 900 or 1200, and comprises an aperture 1602 which may receive a protruding end of the peg when the peg is inserted into a hole on a surface. The size of the aperture may be adjusted so that the inner edge of the aperture frictionally engages the peg, thus ensuring that the holding device 102 is held securely on the peg. During use, the centre of the aperture 1602 is substantially aligned with the centre of the hole on the surface. It is noted that, other than being a separate entity to the pegs and the inclusion of the aperture 1602, the holding device 1601 is the same as the holding device 102 of the previously explained embodiments. Thus, for the sake of brevity, reference numerals of features of holding device 1601 which have already been explained with respect to the holding device 102 have been omitted.

As seen in Figs. 16A-C, the aperture 1602 is circular and the holding device 1601 comprises an iris arrangement 1604 which defines the inner edge of the aperture 1602. This allows the diameter of the aperture to be adjusted. A plurality of blades 1606 of the iris arrangement are controlled by lever 1608 so as to change the diameter of the aperture. In Fig. 16A, the lever 1608 is positioned in a first position (position 1) which causes the blades to be retracted into the body main of the holding device 1601 as far as possible. This results in the largest possible diameter of the aperture. On the other hand, in Fig. 16C, the lever 1608 is positioned in a second position (position 2) which causes the blades to protrude from the main body 1600 of the holding device 1601 as far as possible. This results in the smallest possible diameter of the aperture. It is noted that, in an alternative embodiment, the iris arrangement 1604 may be such that the aperture is eliminated when the lever 1608 is at the second position (that is, the aperture is made to have a diameter substantially equal to zero).

As the lever 1608 is moved from the first position to the second position, the size of the aperture 1602 is made smaller. On the other hand, as the lever 1608 is moved form the second position to the first position, the size of the aperture is made larger. Advantageously, this allows the size of the aperture to be adjusted to the size of the peg with which it is to be used, thus allowing the inner edge of the aperture to frictionally engage and be securely held by pegs of different sizes. This is illustrated in Fig. 16B, in which the lever 1608 is positioned at a suitable point between the first and second position so that the inner edge of the aperture frictionally engages the peg 700.

One further advantage of using an iris arrangement similar to that described above is that the aperture 1602 is always centred at the same point, no matter the size of the aperture. ; In particular, the aperture is always centred where the dotted lines in Figure 16A-16C intersect, which will be aligned with the position of the zero end of the tape measure 106 when the device 1602 is in use. This ensures that whenever the aperture is placed over the peg, and the aperture is closed (by movement of the lever towards position 2), the position of the peg relative to the tape measure will be the same irrespective of the size of the peg or the position of the peg when initially placed in the aperture. This makes it easier to correctly place and position the aperture over the peg.

The holding device 1601 is particularly advantageous for use with pegs such as the peg 700, since the size of the end of the peg 700 which protrudes from a hole in a surface varies depending on the size of the hole. For example, looking again at Figs. 8A-8B, it can be seen that the grip portions 804, 806 protrude from the holes 402, 412 and are closer together for the smaller diameter hole 402 (resulting in a smaller size of the protruding end of the peg 700 and therefore requiring a smaller aperture size for frictional engagement) and are further apart for the larger diameter hole 412 (resulting in a larger size of the protruding end of the peg 700 and therefore requiring a larger aperture size for frictional engagement). The variable size of the aperture 1602 therefore allows reliable frictional engagement of the inner edge of the aperture with the protruding end of the peg 700 despite the varying size of the protruding end of the peg 700 for different sized holes, thus allowing the holding device 1601 to be securely held by the peg 700. Of course, the holding device 1601 is not limited for use with the peg 700, but may be used with any of the pegs 116, 500, 700, 900 or 1200 previously discussed.

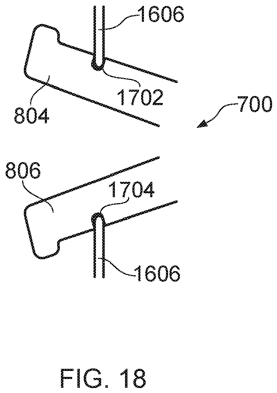

In order to ensure sufficient frictional engagement between the peg and the inner edge of the aperture 1602, the iris blades 1606 may be configured to be biased towards the direction in which they protrude out of the body of the holding device 1601. That is, the iris arrangement may be biased to minimise the aperture size, meaning that a user must work against a resistive force in order to move the lever 1608 away from the second position (in which the aperture size is minimised) towards the first position (in which the aperture size is maximised). This bias causes the aperture blades 1606 to exert a force on the peg, thus increasing the friction between the aperture blades and the peg and causing the holding device 1601 to be held more securely. An arrangement which may used to allow this bias, according to an embodiment, is described with reference to Figs. 18A-B.

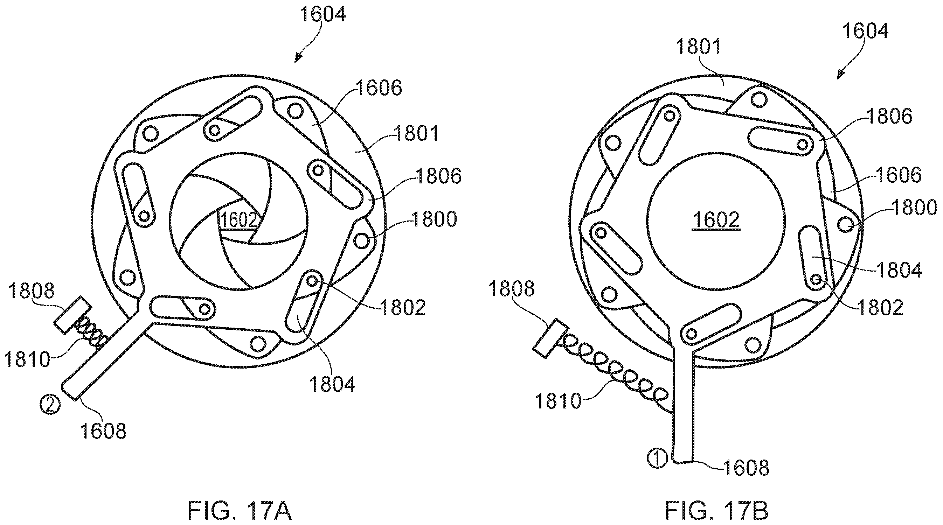

Figs. 17A-B show the iris mechanism 1604 in more detail. Most of the iris mechanism is comprised within the main body 1600 of the holding device 1601 and is therefore not visible when the holding device 1601 is viewed from the outside. Rather, it is only portions of the iris blades 1606 and a portion of the lever 1608 which are visible (see Figs. 16A-C).

Each iris blade 1606 is connected to a support 1801 (which may form part of the main body 1600 of the holding device 1601, for example) by a pivot 1800. This allows each iris blade to pivot with respect to the support 1801. The pivoting of the iris blades allows each iris blade to protrude from and retract into the main body 1600 of the holding device 1601, thus allowing the diameter of the aperture 1602 to be made larger and smaller. The pivoting of the iris places is controlled by a ring 1806 comprising slits 1804, wherein each of the slits engages a nose 1802 attached to one of the iris blades 1606. The ring 1806 is attached to the lever 1608, and rotates relative to the support 1801 as the lever is moved. As the ring 1806 is rotated, a force is exerted on the nose 1802 of each iris blade 1606, causing the iris blades to pivot. The nose 1802 of each iris blade 1606 moves along its respective slit 1804 as the ring 1806 is rotated and as the iris blades are pivoted. In this way, the nose of 1802 of each iris blade is guided by its respective slit 1804 as the iris blades are pivoted. The iris arrangement 1604 further comprises an anchor 1808, which is fixed to the main body 1600 of the holding device 1601 and which does not move. One end of a resilient member 1810 (in this case, a coiled spring) is connected to the anchor 1808. The other end of the resilient member 18010 is connected to the lever 1608.

Fig. 17A shows the lever 1806 in the second position, wherein the iris blades 1606 are protruding from the main body 1600 of the holding device 1601 as far as possible, therefore resulting in the aperture 1602 having its minimum possible diameter. In this case, the resilient member 1810 is under no or little tension. On the other hand, Fig. 17B shows the lever 1806 when, under a force exerted by a user, it is moved into the first position, wherein the iris blades 1606 are retracted into the main body 1600 of the holding device 1601 as far as possible, therefore resulting in the aperture 1602 having its maximum possible diameter. In this case, the resilient member 1810 is under maximum tension. The user must continue applying a force to the lever 1608 which is greater than or equal to the tension of the resilient member 1810 in order to keep the aperture 1602 at its maximum diameter. When the user releases the force on the lever 1608, the tension of the resilient member 1810 causes the ring 1806 to rotate until the lever is returned to the second position, in which the iris blades 1606 are once again fully protruded and the aperture has its minimum possible diameter.

Whenever the lever 1608 is forced away from the second position, and this force is released, the tension of the resilient member 1810 causes the iris blades 1606 to pivot in a direction so as to return to their fully protruded positions (thus causing the aperture 1602 to have its minimum possible diameter). However, if the end of a peg protrudes through the aperture 1602, and the end of the peg is larger in cross section (in at least one dimension) than the minimum possible diameter of the aperture, then the iris blades 1606 cannot return to their fully protruded positions, because their movement will be blocked by the presence of the peg. In this case, the edges of the iris blades 1606 will frictionally engage with the peg, the friction between the iris blades and peg being determined in accordance with the tension of the resilient member 1810. This improves the frictional engagement between the iris blades and the peg compared to the case where no resilient member is used, thus resulting in the holding device 1601 being held more securely on the peg. Furthermore, the use of the resilient member improves the convenience for the user, since once the end of the peg has been caused to protrude through the aperture 1602 during use, the user must simply release the lever 1608 and the iris blades will automatically engage with the peg. The user therefore does not have to manually adjust the size of the aperture to fit the peg.

In one embodiment, the tension of the resilient member 1810 is set so as to provide sufficient friction to prevent rotation of the iris arrangement 1604 with respect to the peg. In this case, the iris arrangement 1604 may be rotatable relative to the main body 1600 of the holding device 1601, thus still allowing rotation of the holding device 1601 relative to the peg. In another embodiment, the tension of the resilient member 1810 may be reduced so as to provide sufficient friction to help prevent the iris blades 1606 from slipping off the peg, but not so high as to prevent rotation of the iris arrangement 1604 from rotating with respect to the peg.

In an alternative embodiment, the anchor 1808 may be placed on the opposite side of the lever 1608 so that the resilient member 1810 is compressed rather than put under tension as the lever 1608 is moved from the second position to the first position. The effect would be similar to that described with respect to Figs. 17A-B, the only difference being that the iris blades 1606 would be biased towards the maximum protrusion state shown in Fig. 17A by a compression force on the resilient member 1810 rather than a tension force. It is also envisaged that the resilient member 1810 may be omitted altogether. In this case, the user will have to manually adjust the size of the aperture 1602 using the lever 1608 so as to achieve frictional engagement between the iris blades and peg. However, it should be ensured that there is sufficient friction between moving parts of the iris arrangement 1604 (for example, at the pivot 1800 of each iris blade 1606 and between the nose 1802 and slit 1804 of each iris blade) so as to prevent unintentional widening of the aperture during use.

As illustrated in Fig. 18, in order to further improve the mechanical engagement of the inner edge of the aperture 1602 with the end of the peg 700, the end of the peg 700 may comprise one or more grooves 1702, 1704 which are configured to receive the iris blades 1606. This provides improved mechanical engagement between the iris blades (which form the inner edge of the aperture) and the peg 700, thus allowing the holding device 1601 to be held more securely. In particular, it is better at helping to prevent the holding device 1601 from slipping off the end of the peg 700 than when frictional engagement alone is used. Of course, the use of grooves is not limited to the peg 700, and any of the pegs 116, 500, 700, 900 or 1200 previously discussed may comprise grooves configured to receive the iris blades.

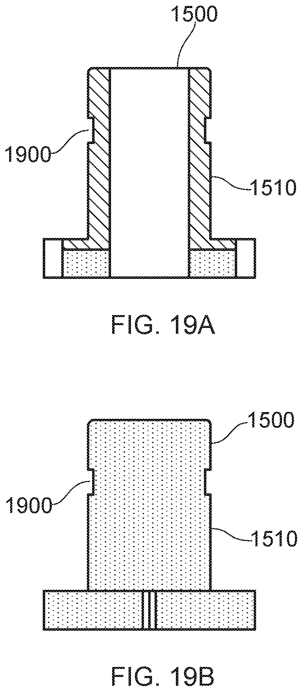

In addition to the inclusion of grooves on the peg, the holding device mount 1500 (see Figs. 15A-D) may also comprise a groove. This is illustrated in Figs. 19A and 19B, which show a section view and elevation view of the holding device mount, respectively. Here, it can be seen that the support portion 1510 of the holding device mount comprises a groove 1900 for receiving the iris blades 1606 of the holding device 1601, thus allowing secure engagement of the iris blades with the holding device mount. Advantageously, this allows the holding device mount to be used with the alternative holding device 1601 in addition to with the holding device 102.

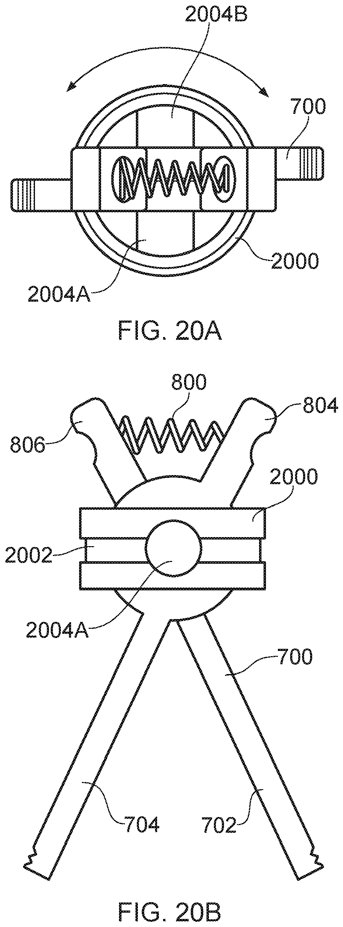

As an alternative to the rotation of the iris arrangement 1604 relative to to the main body 1600 of the holding device 1601 or to the rotation of the iris blades 1606 relative to the peg, the peg itself may comprising a rotating element which engages with the iris blades and which allows rotation of the holding device 1601 relative to the peg. This is illustrated in Figs. 20A-B, which shows the peg 700 comprising such a rotating element. Of course, it will be appreciated that this example is not limited to the peg 700, and that any of the pegs 116, 500, 700, 900 or 1200 previously discussed may comprise such a rotating element.

Fig. 20A shows the peg 700 in plan view and Fig. 20B shows the peg 700 in elevation view. The peg comprises rotating element 2000 which is rotatable relative to the portion of the peg which is insertable into the hole in the surface 108 (that is, the branches 702, 704) in the directions indicated by the arrows shown in Fig. 20A. The rotating element 2000 is supported by supports 2004A and 2004B which extend from the main body of the peg 700 (for example, the supports 2004A, 2004B may extend as part of the pivot 802). The rotating element 2000 is rotatable relative to the supports 2004A, 2004B. The rotating element comprises a groove 2002 for receiving the iris blades 1606, which frictionally engage with the rotating element with sufficient friction so as to prevent slipping of the iris blades relative to the rotating element. Once the iris blades are engaged with the rotating element, the holding device 1601 is rotatable relative to the peg 700 via the rotation of the rotating element. Advantageously, this arrangement allows a larger amount of friction to be used for engagement of the iris blades and peg (thus allowing the holding device 1601 and peg 700 to be engaged more securely) whilst, at the same time, the need to make the iris arrangement 1604 itself rotatable relative to the main body 1600 of the holding device 1601 (so as to allow the holding device 1601 to rotate relative to the peg 700) is avoided. The design of the holding device 1601 is therefore simplified without compromising the secure engagement of the holding device and the peg.

Although it is not shown, it is envisaged that the holding device mount 1500 shown in Figs. 19A-B could also comprising a rotating element similar to that described for a peg with reference to Figs. 20A-B. In this case, the groove 1900 would be comprised as part of the rotating element so as to allow easy rotation of the holding device 1601 relative to the holding device mount 1500. In this case, similar advantages to those described in the previous paragraph will be achieved for use of the holding device with the holding device mount.

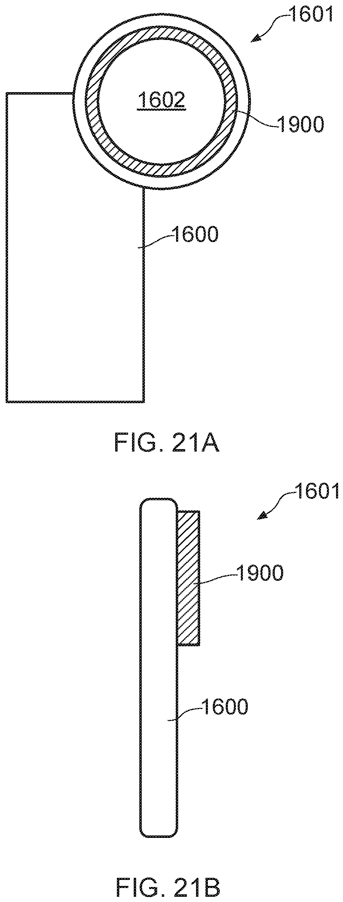

Figs. 21A-B show a further embodiment of the holding device 1601. Fig. 21A shows an opposite side of the holding device 1601 to that shown in Figs. 16A-C and Fig. 21B shows a side view of the holding device 1601. For the sake of brevity, although it is present in the embodiment, no part of the iris arrangement 1604 is shown in Figs. 21A-B. The side of the holding device shown in Fig. 21A (which corresponds to the right hand side of Fig. 21B) is the side which faces the surface 108 comprising the hole into which a peg is inserted. In order to help prevent damage to the surface occurring during use of the holding device 1601, the holding device 1601 comprises a ring of soft material 1900 (such as a latex or silicone based material, for example) which surrounds the aperture (see Fig. 21A) and which protrudes away from the surface of the main body 1600 of the holding device 1601(see Fig. 21B). The existence of the protruding soft material 1900 means that it is the soft material 1900 which makes contact with the surface 108 rather than the material from which the main body 1600 is comprised, which, for rigidity, typically includes hard plastics or the like (that is, materials which are harder than the soft material). This helps to prevent the surface 108 from being damaged by scratching or scoring by the main body 1600 as the holding device 1601 is rotated with respect to the surface 108.

It is noted that in the foregoing description, features described as "substantially parallel" (for example, the measuring level 224 being "substantially parallel" with the guiding edge 222) and "substantially perpendicular" (for example, the tape measure 106 extending in a direction substantially perpendicular to the radial line 118) mean that any deviations from the features being exactly parallel or perpendicular, respectively, would not be noticeable by the user during use of the holding device 102 and/or marking device 104.

Although the foregoing description is related to tape measures, the embodiments are not so limited. For example, it is envisaged that, instead of the tape measure 106, the holding device 102, 1601 and marking device 104 could be used with a straight-edged ruler or the like. The holding device 102, 1601 and marking device 104 could also be used with a conventional measuring level so as to aid with marking points on a surface 108 with the measuring level. It is also envisaged that at least one of the holding device 102, 1601 and marking device 104 could be integrated as part of a tape measure 106. For example, the zero-end of the tape measure could be permanently fixed to the holding device 102, 1601 and the marking device 104 could be permanently attached to the tape measure (although it would still, of course, be slidable along the tape measure). Alternatively, if the tape measure 106 was of the retractable type (that is, comprising a casing into which the tape measure ribbon is retractably storable), then the marking device 104 could be permanently attached to the casing.

Obviously, numerous modifications and variations of the present disclosure are possible in light of the above teachings. It is therefore to be understood that within the scope of the appended claims, the disclosure may be practiced otherwise than as specifically described herein.

Although the present disclosure has been described in connection with some embodiments, it is not intended to be limited to the specific form set forth herein. Additionally, although a feature may appear to be described in connection with particular embodiments, one skilled in the art would recognize that various features of the described embodiments may be combined in any manner suitable to implement the technique.

## Claims

1. A device (102) for holding a tape measure (106), comprising:
a peg (116) which is insertable into a hole on a surface;
a main body (114) configured to rotate about the centre of the hole on the surface when the peg is inserted into the hole, the main body being rotatably or fixedly connected to the peg; and
a holding element (110) configured to hold a portion of the tape measure such that, in use, the tape measure extends in a direction substantially perpendicular to a radial line of a circle centred at the centre of the hole on the surface; wherein
the holding element is configured to hold the portion of the tape measure by frictionally engaging the portion of the tape measure between a surface (200) of the main body and a surface (202) of the holding element;
one of the surface of the main body and the surface of the holding element comprises a resilient member (212) configured to exert a force on the portion of the tape measure so as to frictionally engage the portion of the tape measure between the surface of the main body and the surface of the holding element; and
the main body comprises a longitudinal guiding edge (206) configured to engage a longitudinal edge of the tape measure when the tape measure is held by the holding element so as to guide the tape measure in the direction substantially perpendicular to the radial line of the circle centred at the centre of the hole on the surface.

2. The device according to claim 1 , wherein one of the surface of the main body and the surface of the holding element comprises a magnet.

3. The device according to claim 5, wherein the main body comprises a lip engaging edge (208) substantially aligned with the radial line of the circle centred at the centre of the hole on the surface and configured to engage a lip fixed at the end of the tape measure.

4. A device (104) for marking a point on a surface at a position indicated by a tape measure (106), comprising:
a main body (120);
an attachment element (122) configured to attach the device to the tape measure;
a position indicator (124) configured to, in use, indicate the position of the device along the tape measure; and
a marking element (126) aligned with the position indicator and configured to allow the surface to be marked; wherein:
the attachment element is configured to attach the device to the tape measure by engaging the tape measure between a surface (214) of the main body and a surface (216) of the attachment element;
one of the surface of the main body and the surface of the attachment element comprises a resilient member (220) configured to exert a force on the tape measure so as to frictionally engage the tape measure between the surface of the main body and the surface of the attachment element; and
the main body comprises a guiding edge (222) configured to guide the tape measure in a direction determined by the guiding edge when the tape measure is held by the attachment element and a longitudinal edge of the tape measure engages the guiding edge.

5. The device according to claim 4, comprising a measuring level (224) positioned so as to perform level measuring with respect to one of a direction substantially parallel with the direction determined by the guiding edge and a direction substantially perpendicular to the direction determined by the guiding edge.

6. The device according to claim 4 or 5, wherein the marking element comprises a marker pod (232) configured to mark the surface when it is pressed by a user.

7. A device for holding a tape measure, comprising:
an aperture (1602) configured to receive a peg protruding from a hole on a surface, the aperture being configured such that, when the aperture has received the peg, the centre of the aperture is substantially aligned with the centre of the hole on the surface and an inner edge of the aperture frictionally engages the peg;
a main body (114) configured to rotate about the centre of the hole on the surface when the aperture has received the peg, the main body being rotatable or fixed relative to the inner edge of the aperture; and
a holding element (116) configured to hold a portion of the tape measure such that, in use, when the aperture has received the peg, the tape measure extends in a direction substantially perpendicular to a radial line of a circle centred at the centre of the hole on the surface wherein:
the holding element is configured to hold the portion of the tape measure by frictionally engaging the portion of the tape measure between a surface (200) of the main body and a surface (202) of the holding element;
one of the surface of the main body and the surface of the holding element comprises a resilient member (212) configured to exert a force on the portion of the tape measure so as to frictionally engage the portion of the tape measure between the surface of the main body and the surface of the holding element; and
the main body comprises a longitudinal guiding edge (206) configured to engage a longitudinal edge of the tape measure when the tape measure is held by the holding element so as to guide the tape measure in the direction substantially perpendicular to the radial line of the circle centred at the centre of the hole on the surface.

8. A device according to claim 7, wherein the size of the aperture is adjustable.

9. A device according to claim 8, wherein the inner edge of the aperture is defined by a plurality of blades (1606) which are configured to move in a direction so as to protrude from the main body in order to reduce the size of the aperture and to retract into the main body in order to increase the size of the aperture.

10. A device according to claim 9, wherein each of the plurality of blades is configured to be biased to move in the direction so as to protrude from the main body.

11. A device according to any one of claims 7 to 10, wherein the main body comprises a harder material and a softer material, and a portion of the main body which, in use, contacts the surface comprising the hole comprises the softer material.

12. The device according to claim 7, wherein one of the surface of the main body and the surface of the holding element comprises a magnet.

13. The device according to claim 7, wherein the main body comprises a lip engaging edge (208) substantially aligned with the radial line of the circle centred at the centre of the hole on the surface and configured to engage a lip fixed at the end of the tape measure.

14. A tape measure comprising a device according to any preceding claim.

15. A system comprising a device according to claim 1 or claim 7 and a device according to claim 4.

## Patentansprüche

1. Vorrichtung (102) zum Halten eines Maßbands (106), umfassend:
einen Zapfen (116), der in ein Loch in einer Oberfläche einsetzbar ist;
einen Hauptkörper (114), der konfiguriert ist, um sich um den Mittelpunkt des Lochs in der Oberfläche zu drehen, wenn der Zapfen in das Loch eingesetzt ist, wobei der Hauptkörper drehbar oder starr mit dem Zapfen verbunden ist; und
ein Halteelement (110), das konfiguriert ist, um einen Abschnitt des Maßbands so zu halten, dass sich das Maßband bei Gebrauch in einer Richtung erstreckt, die im Wesentlichen senkrecht zu einer radialen Linie eines Kreises ist, der auf den Mittelpunkt des Lochs in der Oberfläche zentriert ist;
wobei das Halteelement konfiguriert ist, um den Abschnitt des Maßbands zu halten, indem der Abschnitt des Maßbands reibschlüssig zwischen einer Oberfläche (200) des Hauptkörpers und einer Oberfläche (202) des Halteelements eingeklemmt wird;
wobei eine der Oberfläche des Hauptkörpers und der Oberfläche des Halteelements ein elastisches Bauteil (212) umfasst, das konfiguriert ist, um eine Kraft so auf den Abschnitt des Maßbands auszuüben, dass der Abschnitt des Maßbands reibschlüssig zwischen der Oberfläche des Hauptkörpers und der Oberfläche des Halteelements eingeklemmt wird; und
wobei der Hauptkörper eine Längsführungskante (206) umfasst, die konfiguriert ist, um mit einer Längskante des Maßbands in Kontakt zu stehen, wenn das Maßband durch das Halteelement gehalten wird, sodass das Maßband in der Richtung geführt wird, die im Wesentlichen senkrecht zur radialen Linie des Kreises steht, der auf den Mittelpunkt des Lochs in der Oberfläche zentriert ist.

2. Vorrichtung nach Anspruch 1, wobei eine der Oberfläche des Hauptkörpers und der Oberfläche des Halteelements einen Magnet umfasst.

3. Vorrichtung nach Anspruch 5, wobei der Hauptkörper eine lippenkontaktierende Kante (208) umfasst, die im Wesentlichen auf die radiale Linie des Kreises ausgerichtet ist, der auf den Mittelpunkt des Lochs in der Oberfläche zentriert ist, und konfiguriert ist, um mit einer Lippe in Kontakt zu treten, die am Ende des Maßbands befestigt ist.

4. Vorrichtung (104) zum Markieren eines Punktes auf einer Oberfläche an einer Position, die durch ein Maßband (106) angezeigt wird, umfassend:
einen Hauptkörper (120);
ein Befestigungselement (122), das konfiguriert ist, um die Vorrichtung an dem Maßband zu befestigen;
eine Positionsanzeige (124), die konfiguriert ist, um bei Gebrauch die Position der Vorrichtung entlang des Maßbands anzuzeigen; und
ein Markierungselement (126), das auf die Positionsanzeige ausgerichtet ist und konfiguriert ist, um zu erlauben, dass die Oberfläche markiert wird; wobei:
das Befestigungselement konfiguriert ist, um die Vorrichtung an dem Maßband zu befestigen, indem das Maßband zwischen einer Oberfläche (214) des Hauptkörpers und einer Oberfläche (216) des Halteelements eingeklemmt wird;
wobei eine der Oberfläche des Hauptkörpers und der Oberfläche des Befestigungselements ein elastisches Bauteil (220) umfasst, das konfiguriert ist, um eine Kraft so auf das Maßband auszuüben, dass das Maßband reibschlüssig zwischen der Oberfläche des Hauptkörpers und der Oberfläche des Befestigungselements eingeklemmt wird; und
wobei der Hauptkörper eine Führungskante (222) umfasst, die konfiguriert ist, um das Maßband in eine Richtung zu führen, die durch die Führungskante bestimmt wird, wenn das Maßband von dem Befestigungselement gehalten wird und eine Längskante des Maßbands in einem Kontakt mit der Führungskante steht.

5. Vorrichtung nach Anspruch 4, die eine Wasserwaage (224) umfasst, die so positioniert ist, dass sie eine Ausrichtungsmessung in Bezug auf eine Richtung misst, die im Wesentlichen parallel zu einer Richtung, die durch die Führungskante bestimmt wird, und zu einer Richtung ist, die im Wesentlichen senkrecht zu der Richtung steht, die durch die Führungskante bestimmt wird.

6. Vorrichtung nach Anspruch 4 oder 5, wobei das Markierungselement eine Markierungskapsel (232) umfasst, die konfiguriert ist, um die Oberfläche zu markieren, wenn sie von einem Benutzer gedrückt wird.

7. Vorrichtung zum Halten eines Maßbands, umfassend:
eine Öffnung (1602), die konfiguriert ist, um einen Zapfen aufzunehmen, der aus einem Loch in einer Oberfläche herausragt, wobei die Öffnung so konfiguriert ist, dass, wenn die Öffnung den Zapfen aufgenommen hat, der Mittelpunkt der Öffnung im Wesentlichen auf den Mittelpunkt des Lochs in der Oberfläche ausgerichtet ist, und wobei eine Innenkante der Öffnung reibschlüssig mit dem Zapfen in Kontakt steht;
einen Hauptkörper (114), der konfiguriert ist, um sich um dem Mittelpunkt des Lochs in der Oberfläche zu drehen, wenn die Öffnung den Zapfen aufgenommen hat, wobei der Hauptkörper in Bezug auf die Innenkante der Öffnung drehbar oder starr ist; und
ein Halteelement (116), das konfiguriert ist, um einen Abschnitt des Maßbands so zu halten, dass sich das Maßband bei Gebrauch, wenn die Öffnung den Zapfen aufgenommen hat, in einer Richtung erstreckt, die im Wesentlichen senkrecht zu einer radialen Linie eines Kreises steht, der auf den Mittelpunkt des Lochs in der Oberfläche zentriert ist;
wobei das Halteelement konfiguriert ist, um den Abschnitt des Maßbands zu halten, indem der Abschnitt des Maßbands reibschlüssig zwischen einer Oberfläche (200) des Hauptkörpers und einer Oberfläche (202) des Halteelements eingeklemmt wird;
wobei eine der Oberfläche des Hauptkörpers und der Oberfläche des Halteelements ein elastisches Bauteil (212) umfasst, das konfiguriert ist, um eine Kraft so auf den Abschnitt des Maßbands auszuüben, dass der Abschnitt des Maßbands reibschlüssig zwischen der Oberfläche des Hauptkörpers und der Oberfläche des Halteelements eingeklemmt wird; und
wobei der Hauptkörper eine Längsführungskante (206) umfasst, die konfiguriert ist, um mit einer Längskante des Maßbands in Kontakt zu stehen, wenn das Maßband durch das Halteelement gehalten wird, sodass das Maßband in der Richtung geführt wird, die im Wesentlichen senkrecht zur radialen Linie des Kreises steht, der auf den Mittelpunkt des Lochs in der Oberfläche zentriert ist.

8. Vorrichtung nach Anspruch 7, wobei die Größe der Öffnung einstellbar ist.

9. Vorrichtung nach Anspruch 8, wobei die Innenkante der Öffnung durch eine Vielzahl von Lamellen (1606) definiert wird, die konfiguriert sind, um sich in einer Richtung so zu bewegen, dass sie von dem Hauptkörper abstehen, um die Größe der Öffnung zu verringern, und dass sie sich in den Hauptkörper zurückziehen, um die Größe der Öffnung zu vergrößern.

10. Vorrichtung nach Anspruch 9, wobei jede aus der Vielzahl von Lamellen konfiguriert ist, um so vorgespannt zu werden, dass sie sich in einer Richtung bewegt, um von dem Hauptkörper abzustehen.

11. Vorrichtung nach einem der Ansprüche 7 bis 10, wobei der Hauptkörper ein härteres Material und ein weicheres Material umfasst, und wobei ein Abschnitt des Hauptkörpers bei Gebrauch mit der Oberfläche in Kontakt steht, die das Loch umfasst, das das weichere Material umfasst.

12. Vorrichtung nach Anspruch 7, wobei eine der Oberfläche des Hauptkörpers und der Oberfläche des Halteelements einen Magnet umfasst.

13. Vorrichtung nach Anspruch 7, wobei der Hauptkörper eine lippenkontaktierende Kante (208) umfasst, die im Wesentlichen auf die radiale Linie des Kreises ausgerichtet ist, der auf den Mittelpunkt des Lochs in der Oberfläche zentriert ist, und konfiguriert ist, um mit einer Lippe in Kontakt zu treten, die am Ende des Maßbands befestigt ist.

14. Maßband, das eine Vorrichtung nach einem der vorhergehenden Ansprüche umfasst.

15. System, das eine Vorrichtung nach Anspruch 1 oder Anspruch 7 und eine Vorrichtung nach Anspruch 4 umfasst.

## Revendications

1. Dispositif (102) pour tenir un mètre ruban (106), comprenant:
une cheville (116) qui peut être insérée dans un trou sur une surface;
un corps principal (114) configuré de manière à tourner autour du centre du trou sur la surface lorsque la cheville est insérée dans le trou, le corps principal étant connecté de façon rotative ou de façon fixe à la cheville; et
un élément de maintien (110) configuré de manière à tenir une partie du mètre ruban de telle sorte que, lors de l'utilisation, le mètre ruban s'étende dans une direction sensiblement perpendiculaire à une ligne radiale d'un cercle centré au centre du trou sur la surface; dans lequel
l'élément de maintien est configuré de manière à tenir la partie du mètre ruban en engageant par frottement la partie du mètre ruban entre une surface (200) du corps principal et une surface (202) de l'élément de maintien;
une parmi la surface du corps principal et la surface de l'élément de maintien comprend un élément élastique (212) configuré de manière à exercer une force sur la partie du mètre ruban de manière à engager par frottement la partie du mètre ruban entre la surface du corps principal et la surface de l'élément de maintien; et
le corps principal comprend un bord de guidage longitudinal (206) configuré de manière à engager un bord longitudinal du mètre ruban lorsque le mètre ruban est tenu par l'élément de maintien de manière à guider le mètre ruban dans la direction sensiblement perpendiculaire à la ligne radiale du cercle centré au centre du trou sur la surface.

2. Dispositif selon la revendication 1, dans lequel une parmi la surface du corps principal et la surface de l'élément de maintien comprend un aimant.

3. Dispositif selon la revendication 5, dans lequel le bord de guidage présente un bord d'engagement de lèvre (208) qui est sensiblement aligné avec la ligne radiale du cercle centré au centre du trou sur la surface et qui est configuré de manière à engager une lèvre qui est fixée à l'extrémité du mètre ruban.

4. Dispositif (104) pour marquer un point sur une surface à une position indiquée par un mètre ruban (106), comprenant:
un corps principal (120);
un élément de fixation (122) configuré de manière à attacher le dispositif au mètre ruban;
un indicateur de position (124) configuré de manière à, lors de l'utilisation, indiquer la position du dispositif le long du mètre ruban; et
un élément de marquage (126) aligné avec l'indicateur de position et configuré de manière à permettre à la surface d'être marquée; dans lequel
l'élément de fixation est configuré de manière à attacher le dispositif au mètre ruban en engageant le mètre ruban entre une surface (214) du corps principal et une surface (216) de l'élément de fixation;
une parmi la surface du corps principal et la surface de l'élément de fixation comprend un élément élastique (220) qui est configuré de manière à exercer une force sur le mètre ruban de manière à engager par frottement le mètre ruban entre la surface du corps principal et la surface de l'élément de fixation; et
le corps principal comprend un bord de guidage (222) qui est configuré de manière à guider le mètre ruban dans une direction déterminée par le bord de guidage lorsque le mètre ruban est tenu par l'élément de fixation et qu'un bord longitudinal du mètre ruban engage le bord de guidage.

5. Dispositif selon la revendication 4, comprenant un niveau de mesure (224) qui est positionné de manière à exécuter une mesure de niveau par rapport à une parmi une direction sensiblement parallèle à la direction déterminée par le bord de guidage et une direction sensiblement perpendiculaire à la direction déterminée par le bord de guidage.

6. Dispositif selon la revendication 4 ou 5, dans lequel l'élément de marquage comprend une cosse de marquage (232) qui est configurée de manière à marquer la surface lorsqu'elle est pressée par un utilisateur.

7. Dispositif pour tenir un mètre ruban, comprenant:
une ouverture (1602) configurée de manière à recevoir une cheville qui fait saillie à partir d'un trou sur une surface, l'ouverture étant configurée de telle sorte que, lorsque l'ouverture a reçu la cheville, le centre de l'ouverture soit sensiblement aligné avec le centre du trou sur la surface et qu'un bord intérieur de l'ouverture engage par frottement la cheville;
un corps principal (114) configuré de manière à tourner autour du centre du trou sur la surface lorsque l'ouverture a reçu la cheville, le corps principal étant rotatif ou fixe par rapport au bord intérieur de l'ouverture; et
un élément de maintien (116) configuré de manière à tenir une partie du mètre ruban de telle sorte que, lors de l'utilisation, lorsque l'ouverture a reçu la cheville, le mètre ruban s'étende dans une direction sensiblement perpendiculaire à une ligne radiale d'un cercle centré au centre du trou sur la surface; dans lequel
l'élément de maintien est configuré de manière à tenir la partie du mètre ruban en engageant par frottement la partie du mètre ruban entre une surface (200) du corps principal et une surface (202) de l'élément de maintien;
une parmi la surface du corps principal et la surface de l'élément de maintien comprend un élément élastique (212) qui est configuré de manière à exercer une force sur la partie du mètre ruban de manière à engager par frottement la partie du mètre ruban entre la surface du corps principal et la surface de l'élément de maintien; et
le corps principal comprend un bord de guidage longitudinal (206) configuré de manière à engager un bord longitudinal du mètre ruban lorsque le mètre ruban est tenu par l'élément de maintien de manière à guider le mètre ruban dans la direction sensiblement perpendiculaire à la ligne radiale du cercle centré au centre du trou sur la surface.

8. Dispositif selon la revendication 7, dans lequel la taille de l'ouverture est réglable.

9. Dispositif selon la revendication 8, dans lequel le bord intérieur de l'ouverture est défini par une pluralité de lames (1606) qui sont configurées de manière à se déplacer dans une direction de manière à faire saillie à partir du corps principal dans le but de réduire la taille de l'ouverture et à se rétracter dans le corps principal dans le but d'augmenter la taille de l'ouverture.

10. Dispositif selon la revendication 9, dans lequel chacune de la pluralité de lames est configurée de manière à être poussée pour se déplacer dans la direction de façon à faire saillie à partir du corps principal.

11. Dispositif selon l'une quelconque des revendications 7 à 10, dans lequel le corps principal comprend un matériau plus dur et un matériau plus mou, et une partie du corps principal qui, lors de l'utilisation, entre en contact avec la surface comportant le trou comprend le matériau plus mou.

12. Dispositif selon la revendication 7, dans lequel une parmi la surface du corps principal et la surface de l'élément de maintien comprend un aimant.

13. Dispositif selon la revendication 7, dans lequel le corps principal présente un bord d'engagement de lèvre (208) qui est sensiblement aligné avec la ligne radiale du cercle centré au centre du trou sur la surface et qui est configuré de manière à engager une lèvre qui est fixée à l'extrémité du mètre ruban.

14. Mètre ruban, comprenant un dispositif selon l'une quelconque des revendications précédentes.

15. Système comprenant un dispositif selon la revendication 1 ou la revendication 7 et un dispositif selon la revendication 4.
